# EUROPÄISCHE PATENTSCHRIFT

(11) **EP 3 107 387 B1**
(45) Veröffentlichungstag und Bekanntmachung des Hinweises auf die Patenterteilung: **11.04.2018**
(21) Anmeldenummer: 15706157.3
(22) Anmeldetag: 19.02.2015
(51) Int. Cl.: A01N 25/30, A01N 35/10, A01N 37/40, A01N 39/04, A01N 41/10, A01N 43/54, A01N 47/36, A01P 13/00, A01N 37/38, A01N 41/12, A01N 43/66

(54) **WÄSSRIGE ADJUVANT-ZUSAMMENSETZUNG ZUR WIRKUNGSSTEIGERUNG VON ELEKTROLYT-WIRKSTOFFEN**
AQUEOUS ADJUVANT-COMPOSITION FOR ENHANCING THE ACTIVITY OF ELECTROLYTE-ACTIVE SUBSTANCES
COMPOSITION D'ADJUVANT AQUEUSE APTE À AUGMENTER L'EFFET DE SUBSTANCES ACTIVES SOUS FORME D'ÉLECTROLYTES

(30) Priorität: 19.02.2014 DE 102014203031; 30.04.2014 DE 102014208252
(43) Veröffentlichungstag der Anmeldung: 28.12.2016
(73) Patentinhaber: Clariant International Ltd, 4132 Muttenz (CH)
(72) Erfinder: BAUR, Peter, 86938 Schondorf (DE); KLUG, Peter, 63762 Grossostheim (DE); ARNOLD, Roland, 65627 Elbtal (DE); MANSOUR, Peter, 65185 Wiesbaden (DE)
(74) Vertreter: Paczkowski, Marcus
(86) Internationale Anmeldenummer: PCT/EP2015/000370
(87) Internationale Veröffentlichungsnummer: WO 2015/124302

(56) Entgegenhaltungen:
- WO-A1-96/16540
- WO-A1-2014/067663

## Beschreibung

Die Erfindung betrifft eine wässrige Adjuvant-Zusammensetzung, die Alkylglucamide enthält, deren Verwendung zur Wirkungssteigerung von Elektrolyt-Wirkstoffen sowie wässrige Pestizid-Zusammensetzungen enthaltend die Adjuvant-Zusammensetzung.

Pestizide (vor allem Herbizide, Fungizide und Insektizide) sind chemische Substanzen, synthetisch hergestellt oder natürlichen Ursprungs, die in Pflanzenzellen, -gewebe oder in parasitäre Organismen in oder auf der Pflanze eindringen und diese schädigen und/oder zerstören. Den größten Anteil an Pestiziden stellen Herbizide dar. Pestizide werden üblicherweise in Form von flüssigen oder festen konzentrierten Zubereitungen (Formulierungen) in der Landwirtschaft eingesetzt. Die erleichtern dem Anwender so die Handhabung oder sorgen für eine höhere Wirksamkeit des Wirkstoffs. Die Formulierungen werden üblicherweise vor dem Einsatz mit Wasser verdünnt und anschließend durch Sprühapplikation ausgebracht.

Wasserlösliche Konzentrate (Soluble Liquids, abgekürzt mit SL) sind eine wichtige Form der Pestizidzubereitungen. Sie spielen insbesondere bei Herbiziden eine große Rolle, wobei die Pestizide oftmals als wasserlösliche Salze, die durch Neutralisation der Säureform der Herbizide mit geeigneten Basen in ihre Alkali-oder Ammoniumsalze überführt werden, eingesetzt werden. Unter Umständen ist ein zweiter nicht wasserlöslicher Wirkstoff in der Pestizidzubereitung enthalten. Dann handelt es sich um ein Suspensionskonzentrat (SC), auch wenn in der wäßrigen Phase ein Wirkstoff gelöst ist.

Eine besonders wichtige Rolle spielen die wasserlöslichen Salze von Herbiziden, beispielsweise des Glyphosats, Glufosinats oder der Auxin-Herbizide wie 2,4-D oder Dicamba. Sie werden vorzugsweise als Alkalimetallsalz oder in Form verschiedener Ammoniumsalze bzw. als Gemisch dieser Salze meistens als wässrige Formulierungen verwendet.

Ein generelles Problem bei der Anwendung von Pestiziden ist, dass nur ein Bruchteil des Wirkstoffes die gewünschte Aktivität entfaltet. Der größere Teil geht oft ungenutzt verloren, indem der Wirkstoff bei der Ausbringung der Spritzbrühe nicht die Blätter oder die Wurzeln der Pflanze erreicht, sondern ungenutzt im Boden versickert, durch Regen abgewaschen oder von der Pflanze einfach nicht richtig aufgenommen wird.

Dieser ökologische und ökonomische Nachteil kann durch Zugabe von Hilfsstoffen, in der Fachsprache als "Adjuvant/Adjuvants", bezeichnet, zu PestizidFormulierungen verringert werden. Diese Hilfsstoffe können beispielsweise den Spray-Drift reduzieren, die Benetzung der Pflanze verbessern oder dafür sorgen, dass der Wirkstoff länger auf der Pflanzenoberfläche haftet bzw. besser aufgenommen wird. Insbesondere bei wasserlöslichen Pestiziden, wie bei Glyphosat, haben die Art sowie die Menge der verwendeten Adjuvantien einen entscheidenden Einfluss auf die Wirksamkeit der Formulierung.

Die mit Abstand am häufigsten verwendeten Adjuvantien in wässrigen Herbizid-Formulierungen sind Fettaminethoxylate, hauptsächlich Talgfettaminethoxylate. Diese Produkte sind jedoch aufgrund ihrer toxischen und ökotoxikologischen Eigenschaften, wie der starken Augenreizung oder der Toxizität gegenüber aquatischen Organismen als bedenklich einzustufen und werden zunehmend durch Adjuvants mit einem besseren toxikologischen und ökotoxikologischen Profil ersetzt.

Adjuvants, die in wässrigen Pestizidformulierungen eingesetzt werden, liegen üblicherweise in flüssiger Form, d.h. als wassermischbare Lösungen vor, um die Herstellung der Pestizidformulierung zu vereinfachen. Die Adjuvant-Lösungen können Wasser und/oder wassermischbare Lösemittel enthalten, die zusammen mit dem Pestizid eine homogene und lagerstabile wässrige Formulierung ergeben. Wenn möglich wird Wasser als Lösemittel eingesetzt, da dies sowohl aus Kostenals auch aus Umweltgesichtspunkten bevorzugt ist. Gegebenenfalls werden Co-Solventien zugesetzt, die in der Lage sind, die Löslichkeit oder die Stabilität zu verbessern.

Die Verwendung von zuckerbasierenden Tensiden, wie Alkyl-N-methylglucosamiden, beispielsweise in Reinigungsmitteln und kosmetischen Produkten, ist in der Literatur beschrieben (F.W. Lichtenthaler, "Carbohydrates as Organic Raw Materials" in Ullmann's Ullmann's Encyclopedia of Industrial Chemistry, Wiley-VCH Verlag, 2010).
WO 96/16540 beschreibt Pestizidzusammensetzungen mit langkettigen Alkylamiden, die einen Polyhydroxycarbonyl-Substituenten mit mindestens drei Hydroxylgruppen am Amidstickstoff tragen. In den Beispielen sind Emulsionskonzentrate, wasserdispergierbare Pulver und Granulate von Dodecyl-N-methylglucamid, Dodecyltetradecyl-N-methylglucamid und Cetylstearyl-N-methylglucamid beschrieben.

Die Anforderungen an Adjuvants in wässrigen Pestizid-Zusammensetzungen sind im Laufe der Jahre stetig angewachsen. Neben hoher biologischer Wirksamkeit und Unbedenklichkeit, sowohl aus Sicht des Anwenders als auch unter Umweltgesichtspunkten, werden zunehmend vorteilhaftere anwendungstechnische Eigenschaften gefordert. Die Adjuvants sollen eine möglichst hohe Beladung der Formulierung mit dem Wirkstoff ermöglichen und möglichst mit verschiedenen Wirkstoffen kompatibel sein. Die Formulierungen müssen lagerstabil sein und eine möglichst niedrige Viskosität aufweisen, um eine leichtere Handhabung zu gewährleisten, sowie die möglichst vollständige Entleerung der Gebinde erleichtern. Außerdem ist eine gute Mischbarkeit und schnelles Lösevermögen, auch und besonders in kaltem Wasser, beim Ansetzen der Spritzbrühe gefordert.

Es stellte sich somit die Aufgabe, weitere wässrige Adjuvant-Zusammensetzungen zur Verfügung zu stellen, die hochwirksam sind, sich durch ein sehr vorteilhaftes toxikologisches und ökologisches Profil auszeichnen und aus anwendungstechnischer Sicht vorteilhafte Eigenschaften aufweisen. Weitere wünschenswerte Eigenschaften eines Adjuvants sind die Steigerung der Aufnahme von systemischen Wirkstoffen, Benetzung, Solubilisierung und Kombinierbarkeit mit Ammoniumsulfat und Elektrolyt-Wirkstoffen sowie eine ausgezeichnete Pflanzenverträglichkeit.

Die Aufgabe wird gelöst durch eine, vorzugsweise einphasige, Adjuvant-Zusammensetzung enthaltend
a) ein oder mehrere Alkylglucamide der Formel (I), 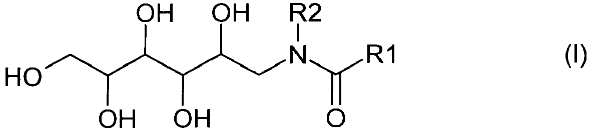 worin
   R1 für eine lineare oder verzweigte Alkylgruppe mit 5 bis 9 Kohlenstoffatomen steht,
   R2 für eine Alkylgruppe mit 1 bis 3 Kohlenstoffatomen steht,
b) mindestens ein wasserlösliches Ammoniumsalz, bevorzugt gewählt aus der Gruppe bestehend aus Ammoniumsulfat, Ammoniumnitrat, Ammoniumnitrat-harnstoff, Ammoniumphosphat, Ammoniumcitrat, Ammoniumchlorid und Ammoniumthiosulfat,
c) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten, und
d) Wasser.

Weiterhin Gegenstand der Erfindung ist die Verwendung einer erfindungsgemäßen Zusammensetzung als Adjuvant für Pestizid-Zusammensetzungen.

Weiterhin Gegenstand der Erfindung ist eine Pestizid-Zusammensetzung enthaltend das erfindungsgemäße Adjuvant.

Ebenso Gegenstand der Erfindung ist ein Verfahren zur Bekämpfung von Schadorganismen, wobei man den Schadorganismus oder dessen Lebensraum mit einer Pestizid-Zusammensetzung, enthaltend die erfindungsgemäße Adjuvant-Zusammensetzung, in Kontakt bringt.

Die erfindungsgemäße Adjuvant-Zusammensetzung erhöht insbesondere die Wirksamkeit von Elektrolyt-Wirkstoffen, d.h. Pestiziden, die als wasserlösliche Salze vorliegen.

In einer bevorzugten Ausführungsform enthält die Adjuvant-Zusammensetzung neben Wasser und Propylenglykol keine weiteren Lösungsmittel.

In einer weiteren bevorzugten Ausführungsform besteht die Adjuvant-Zusammensetzung aus den Komponenten a) bis d).

Als Komponente a) enthält die Adjuvant-Zusammensetzung ein oder mehrere Alkylglucamide der Formel (I).

In dem einen oder den mehreren Alkylglucamiden der Formel (I) steht der Rest R1 vorzugsweise für eine lineare oder verzweigte Alkylgruppe mit 7 bis 9 Kohlenstoffatomen. Der Rest R2 steht bevorzugt für eine Methylgruppe.

Besonders bevorzugt enthalten die erfindungsgemäßen Adjuvant-Zusammensetzungen ein Gemisch aus Octyl-N-methylglucamid (R1 = C₇-Alkyl, R2 = Methyl) und Decyl-N-methylglucamid (R1 = C₉-Alkyl, R2 = Methyl). Der Anteil an Octyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Der Anteil an Decyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Bevorzugt ist auch Nonyl-N-Methylglucamid (R1 = C₈-Alkyl, R2 = Methyl, basierend auf Pelargonsäure).

Der Pentahydroxyhexylrest in den Alkylglucamiden der Formel (I) verfügt über verschiedene chirale Zentren, so dass jeweils mehrere Stereoisomere existieren können. Üblicherweise werden die Alkylglucamide der Formel (I) aus natürlich vorkommenden Zuckern, wie der D-Glucose hergestellt, grundsätzlich ist aber auch die Verwendung anderer natürlicher oder synthetischer Hexosen oder anderer C₆-Bausteine möglich, so dass unterschiedliche Stereoisomere der Formel (I) resultieren können.

Die Herstellung der Alkylglucamide der Formel (I) ist hinlänglich vorbeschrieben und dem Fachmann bekannt. Sie erfolgt beispielsweise durch Kondensation von Carbonsäureestern mit einem sekundären N-Alkylglucamin, welches seinerseits durch reduktive Aminierung aus einem Zucker wie D-Glucose hergestellt werden kann.

Bevorzugt enthalten die wässrigen Adjuvant-Zusammensetzungen 5 bis 90 Gew.-%, besonders bevorzugt 10 bis 80 Gew.-% und insbesondere bevorzugt 10 bis 30 Gew.-% des einen oder der mehreren Alkylglucamide der Komponente a).

Mit den oben beschriebenen Alkylglucamiden der Formel (I) lassen sich erfindungsgemäße Pestizid-Zusammensetzungen, insbesondere wässrige Herbizid-Formulierungen, mit ausgezeichneten anwendungstechnischen Eigenschaften herstellen.

Die Alkylglucamide der Formel (I) basieren bevorzugt auf nachwachsenden Rohstoffen und zeichnen sich durch ein vorteilhaftes toxikologisches und ökologisches Profil aus. Sie besitzen eine hohe Löslichkeit in Wasser.

Als Komponente b) enthalten die Adjuvant-Zusammensetzungen ein oder mehrere, bevorzugt ein oder zwei, besonders bevorzugt ein wasserlösliches Ammoniumsalz.

Bevorzugt als Ammoniumsalze sind Ammoniumsulfat, Ammoniumnitrat, Ammoniumnitratharnstoff, Ammoniumphosphat, Ammoniumcitrat, Ammoniumthiosulfat und/oder Ammoniumchlorid, besonders bevorzugt Ammoniumsulfat, Ammoniumnitrat, Ammoniumcitrat und/oder Ammoniumnitratharnstoff, ganz besonders bevorzugt Ammoniumsulfat.

Bevorzugt enthalten die Adjuvant-Zusammensetzungen 5 bis 60 Gew.-%, besonders bevorzugt 10 bis 50 Gew.-%, insbesondere bevorzugt 20 bis 50 Gew.-% des einen oder der mehreren Ammoniumsalze.

Als Komponente c) enthalten die Adjuvant-Zusammensetzungen Propylenglykol oder Dipropylenglykol, sowie Kombinationen beider untereinander oder mit Polypropylenglykol oder Polyethylenglykol mit bis zu 10 Wiederholendeinheiten. Bevorzugt ist Propylenglykol.

Der Gehalt an Propylenglykol beträgt bevorzugt 1 bis 30 Gew.-%, besonders bevorzugt 2 bis 10 Gew.-%, insbesondere bevorzugt 2 bis 5 Gew.-%.

Als Komponente d) enthalten die Adjuvant-Zusammensetzungen Wasser. Als Wasser kommen beispielsweise entsalztes Wasser, Grund-, See- oder Leitungswasser in Frage. Bevorzugt hat das Wasser eine Härte von unter 15 ° dH (Deutscher Härte).

Der Wassergehalt beträgt bevorzugt 20 bis 89 Gew.-%, besonders bevorzugt 25 bis 70 Gew.-%, insbesondere bevorzugt 30 bis 60 Gew.-%.

In einer Ausführungsform können die Adjuvant-Zusammensetzungen neben den Komponenten a) bis d) außer der Komponente c) ein weiteres Co-Solvens e) enthalten.

Das optional enthaltene Co-Solvens e) kann entweder als Nebenkomponente aus dem Herstellungsprozess des Alkylglucamids zugegen sein oder nachträglich zur Adjuvant-Zusammensetzung zugegeben worden sein. Bei dem Co-Solvens kann es sich um ein einziges Lösemittel oder ein Gemisch zweier oder mehrerer Lösemittel handeln. Dazu eignen sich alle polaren Lösemittel, die mit der wässrigen Pestizidzusammensetzung kompatibel sind und eine homogene Phase bilden. Geeignete Co-Solventien sind beispielsweise einwertige Alkohole, wie Methanol, Ethanol, Propanole, Butanole, Benzylalkohol oder weitere mehrwertige Alkohole wie Ethylenglykol, Diethylenglykol oder Glycerin oder Polyglykole wie Polyethylen-, Polypropylen- oder gemischte Polyalkylenglykole (PAGs). Weitere geeignete Lösemittel sind Ether wie beispielsweise Propylenglykolmono- oder dimethylether, Dipropylenglykolmono- oder dimethylether, Amide wie beispielsweise N-Methyl- oder N-Ethylpyrrolidon, Milchsäure-, Capryl- oder Decansäuredimethylamid.

Der Anteil des Co-Solvens in der Zusammensetzung, falls vorhanden, beträgt üblicherweise 10 bis 250 g/l, bevorzugt 20 bis 200 g/l und besonders bevorzugt 30 bis 150 g/l.

In einer bevorzugten Ausführungsform enthält das erfindungsgemäße Adjuvant kein weiteres Co-Solvens e).

In einer weiteren Ausführungsform können die erfindungsgemäßen Adjuvant-Zusammensetzungen neben Komponenten a) bis d) und gegebenenfalls e) ein oder mehrere weitere Hilfsstoffe f) enthalten, wobei es sich bei diesen beispielsweise um Konservierungsmittel, Tenside, Entschäumer, funktionelle Polymere oder zusätzliche Adjuvants handeln kann. Beispiele für solche Hilfsstoffe finden sich weiter unten.

Die Adjuvant-Zusammensetzungen eignen sich als Adjuvants in wässrigen Pestizidzusammensetzungen zur Verbesserung der biologischen Aktivität von Herbiziden, Insektiziden, Fungiziden, Akariziden, Bakteriziden, Molluskiden, Nematiziden und Rodentiziden.

Gegenstand der Erfindung ist daher auch die Verwendung der erfindungsgemäßen Adjuvant-Zusammensetzungen zur Steigerung der biologischen Aktivität von Pestiziden, insbesondere von Herbiziden.

Die Adjuvant-Zusammensetzungen eignen sich hervorragend zur Herstellung von lagerstabilen wässrigen Pestizid-Zusammensetzungen, die vorteilhafte Eigenschaften besitzen.

Gegenstand der Erfindung ist daher auch die Verwendung von erfindungsgemäßen Adjuvant- Zusammensetzungen zur Herstellung von wässrigen Pestizid-Zusammensetzungen. Verfahren zur Herstellung solcher Pestizid-Zusammensetzungen sind dem Fachmann bekannt.

Gegenstand der Erfindung sind weiterhin auch wässrige Pestizid-Zusammensetzungen, enthaltend
a) ein oder mehrere Alkylglucamide der Formel (I), 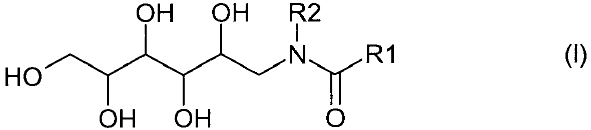 worin
   R1 für eine lineare oder verzweigte Alkylgruppe mit 5 bis 9 Kohlenstoffatomen steht,
   R2 für eine Alkylgruppe mit 1 bis 3 Kohlenstoffatomen steht,
b) ein oder mehrere Ammoniumsalze,
c) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten,
d) Wasser,
e) gegebenenfalls ein oder mehrere Co-Solventien,
f) gegebenenfalls ein oder mehrere Hilfsstoffe,
g) ein oder mehrere wasserlösliche Pestizide und
h) gegebenenfalls ein oder mehrere nicht-wasserlösliche Pestizide.

Unter wasserlöslichen Pestiziden im Sinne der Erfindung sind Pestizide zu verstehen, die bei Raumtemperatur (25 °C) eine Löslichkeit von mehr 50 g/l und vorzugsweise mehr als 100 g/l in Wasser aufweisen. Besonders bevorzugt sind Pestizide, die bei der Einsatzkonzentration bei 20 °C eine Löslichkeit von mindestens 90 Gew.-% aufweisen.

Vorzugsweise genannt seien als Pestizide Fungizide, Bakterizide, Insektizide, Akarizide, Nematizide, Herbizide, Pflanzenwuchsregulatoren, Pflanzennährstoffe und Repellents.

Die erfindungsgemäßen Zusammensetzungen sind vorzugsweise geeignet für Kombinationen mit einem oder mehreren der folgenden wasserlöslichen Wirkstoffe (Komponente g):
Die erfindungsgemäßen Zusammensetzungen können daneben, in der Formulierung oder auch der Spritzbrühe, weitere Pestizide enthalten, die gelöst oder auch dispergiert vorliegen können.

Im Folgenden werden weiter Beispiele für Pestizide genannt, die gelöst als Komponente (g) vorliegen oder Kombinationspartner dieser Pestizide (Komponente h)) bilden können.

Als Beispiele für Herbizide seien genannt: Acifluorfen, Aminopyralid, Amitrol, Asulam, Benazolin, Bentazon, Bialaphos, Bicyclopyron, Bispyribac, Bromacil, Bromoxynil, , Chloramben, Clopyralid, 2,4-D, 2,4-DB, Dicamba, Dichlorprop, Dichlorprop-P, Difenzoquat, Diquat, Endothal, Fenoxaprop, Fenoxaprop-P, Flamprop, Florasulam, Flumiclorac, Fluoroglycofen, Fluroxypyr, Fomesafen, Fosamine, Glufosinat, Glufosinat-P, Glyphosat, Imazameth, Imazamethabenz, Imazamox, Imazapic, Imazapyr, Imazaquin, Imazethapyr, MCPA, MCPB, Mecoprop, Mesotrione, Nicosulfuron, Octansäure, Pelargonsäure, Picloram, Quizalofop, Quizalofop-P, 2,3,6-TBA, Sulcotrione, Tembotrione und Triclopyr zu nennen, bevorzugt jeweils in Form ihrer wasserlöslichen Salze.

Bevorzugte Salze sind dabei z.B. Acifluorfen-Natrium, Bialafos-Natrium, Bispyridac-Natrium, Glufosinat-Ammonium, Glufosinat-P-Ammonium, Glufosinat-P-Natrium, Glyphosat-Isopropylammonium, Glyphosat-Trimesium, Imazamox-Ammonium, Imazapyr-Isopropylammonium, Imazaquinammonium, Imazethapyr-Ammonium, MCPB-Natrium, Mecocrop-Natrium, Mecocrop-P-Dimethylammonium und Mecocrop-P-kalium.

Wirkstoffe, die auf einer Inhibition von beispielsweise Acetolaktat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441 445 oder "The Pesticide Manual", 16th edition, The British Crop Protection Council and the Royal Soc. of Chemistry, 2012 und dort zitierter Literatur beschrieben sind. Als bekannte Herbizide oder Pflanzenwachstumsregulatoren, die mit den erfindungsgemäßen Verbindungen kombiniert werden können, sind z.B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt:
Acetochlor, Acibenzolar, Acibenzolar-S-methyl, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlorkalium, Aminocyclopyrachlormethyl, Ammoniumsulfamat, Ancymidol, Anilofos, Atrazine, Aviglycin, Azafenidin, Azimsulfuron, Aziprotryn, Beflubutamid, Benazolinethyl, Bencarbazone, Benfluralin, Benfuresate, Bensulide, Bensulfuron, Bensulfuronmethyl, Benzfendizone, Benzobicyclon, Benzofenap, Benzofluor, Benzoylprop, Benzyladenin, Bifenox, Bilanafos, Bilanafosnatrium, Bromobutide, Bromofenoxim, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazoneethyl, Carvone, Chlorcholinchlorid, Chlomethoxyfen, Chlorazifop, Chlorazifopbutyl, Chlorbromuron, Chlorbufam, Chlorfenac, Chlorfenacnatrium, Chlorfenprop, Chlorflurenol, Chlorflurenol-methyl, Chloridazon, Chlorimuron, Chlorimuronethyl, Chlormequatchlorid, Chlornitrofen, 4-Chlorophenoxyacetic acid, Chlorophthalim, Chlorpropham, Chlorthaldimethyl, Chlorotoluron, Chlorsulfuron, Cinidon, Cinidonethyl, Cinmethylin, Cinosulfuron, Clethodim, Clodinafop, Clodinafoppropargyl, Clofencet, Clomazone, Clomeprop, Cloprop, Cloransulam, Cloransulammethyl, Cloxyfonac, Cumyluron, Cyanamide, Cyanazine, Cyclanilide, Cycloate, Cyclosulfamuron, Cycloxydim, Cycluron, Cyhalofop, Cyhalofopbutyl, Cyperquat, Cyprazine, Cyprazole, Cytokinine, Daimuron/Dymron, Dalapon, Daminozide, Dazomet, n-Decanol, Desmedipham, Desmetryn, Detosyl-Pyrazolate (DTP), Diallate, Diaminozid, Dichlobenil, Dichlorprop-P, Diclofop, Diclofopmethyl, Diclofop-P-methyl, Diclosulam, Diethatyl, Diethatylethyl, Difenoxuron, Diflufenican, Diflufenzopyr, Diflufenzopyrnatrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquatdibromide, Dithiopyr, Diuron, DNOC, Eglinazineethyl, EPTC, Esprocarb, Ethalfluralin, Ethametsulfuron, Ethametsulfuronmethyl, Ethylnaphthylacetat, Ethephon, Ethidimuron, Ethiozin, Ethofumesate, Ethoxyfen, Ethoxyfenethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxapropethyl, Fenoxaprop-P-ethyl, Fenoxasulfone, Fentrazamide, Fenuron, Flamprop, Flamprop-M-isopropyl, Flamprop-M-methyl, Flazasulfuron, Fluazifop, Fluazifop-P, Fluazifopbutyl, Fluazifop-P-butyl, Fluazolate, Flucarbazone, Flucarbazonesodium, Flucetosulfuron, Fluchloralin, Flufenacet (Thiafluamide), Flufenpyr, Flufenpyrethyl, Flumetralin, Flumetsulam, Flumicloracpentyl, Flumioxazin, Flumipropyn, Fluometuron, Fluorodifen, Fluoroglycofenethyl, Flupoxam, Flupropacil, Flupropanate, Flupyrsulfuron, Flupyrsulfuronmethylsodium, Flurenol, Flurenolbutyl, Fluridone, Flurochloridone, Fluroxypyr-meptyl, Flurprimidol, Flurtamone, Fluthiacet, Fluthiacetmethyl, Fluthiamide, Foramsulfuron, Forchlorfenuron, Furyloxyfen, Gibberellinsäure, H-9201, d. h. O-(2,4-Dimethyl-6-nitrophenyl)-O-ethylisopropylphosphor amidothioat, Halosafen, Halosulfuron, Halosulfuronmethyl, Haloxyfop, Haloxyfop-P, Haloxyfopethoxyethyl, Haloxyfop-P-ethoxyethyl, Haloxyfopmethyl, Haloxyfop-P-methyl, Hexazinone, HW-02, d. h. 1-(Dimethoxyphosphoryl)-ethyl-(2,4-dichlorphenoxy)acetat, Imazamethabenzmethyl, Imazosulfuron, Inabenfide, Indanofan, Indaziflam, Indolessigsäure (IAA), 4-lndol-3-ylbuttersäure (IBA), lodosulfuron, lodosulfuronmethyl-natrium, lofensulfuron, lofensulfuronnatrium, loxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPB-methyl, -ethyl, Mecopropbutotyl, Mecoprop-P-butotyl, Mecoprop-P-2-ethylhexyl, Mefenacet, Mefluidide, Mepiquat-chlorid, Mesosulfuron, Mesosulfuronmethyl, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuronmethyl, Molinate, Monalide, Monocarbamide, Monocarbamidedihydrogensulfat, Monolinuron, Monosulfuron, Monosulfuronester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d.h. 4-(2,4-Dichlorobenzoyl)-1-methyl-5-benzyloxypyrazole, Neburon, Nipyraclofen, Nitralin, Nitrofen, Nitroguaiacolate, Nitrophenolat-natrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquatdichlorid, Pendimethalin, Pendralin, Penoxsulam, Pentanochlor, Pentoxazone, Perfluidone, Pethoxamid, Phenisopham, Phenmedipham, Phenmediphamethyl, Picolinafen, Pinoxaden, Piperophos, Pirifenop, Pirifenopbutyl, Pretilachlor, Primisulfuron, Primisulfuronmethyl, Probenazole, Profluazol, Procyazine, Prodiamine, Prifluraline, Profoxydim, Prohexadione, Prohexadionecalcium, Prohydrojasmone, Prometon, Prometryn, Propachlor, Propanil, Propaquizafop, Propazine, Propham, Propisochlor, Propoxycarbazone, Propoxycarbazonenatrium, Propyrisulfuron, Propyzamide, Prosulfalin, Prosulfocarb, Prosulfuron, Prynachlor, Pyraclonil, Pyraflufen, Pyraflufenethyl, Pyrasulfotole, Pyrazolynate (Pyrazolate), Pyrazosulfuron, Pyrazosulfuronethyl, Pyrazoxyfen, Pyribambenz, Pyribambenzisopropyl, Pyribambenzpropyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofopethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulfallate (CDEC), Sulfentrazone, Sulfometuron, Sulfometuron-methyl, Sulfo-sulfuron, SW-065, SYN-523, SYP-249, d.h. 1-Ethoxy-3-methyl-1-oxobut-3-en-2-yl-5-[2-chlor-4-(trifluormethyl)phenoxy]-2-nitrobenzoat, SYP-300, d.h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazonemethyl, Thifensulfuron, Thifensulfuronmethyl, Thiobencarb, Tiocarbazil, Topramezone, Tralkoxydim, Triafamone, Triallate, Triasulfuron, Triaziflam, Triazofenamide, Tribenuron, Tribenuronmethyl, Tribufos, Trichloressigsäure (TCA), Tridiphane, Trietazine, Trifloxysulfuron, Trifloxysulfuronnatrium, Trifluralin, Triflusulfuron, Triflusulfuronmethyl, Trimeturon, Trinexapac, Trinexapacethyl, Tritosulfuron, Tsitodef, Uniconazole, Uniconazole-P, Vernolate, ZJ-0862, d. h. 3,4-Dichlor-N-{2-[(4,6-dimethoxypyrimidin-2-yl)oxy]benzyl}anilin, sowie die folgenden Verbindungen:

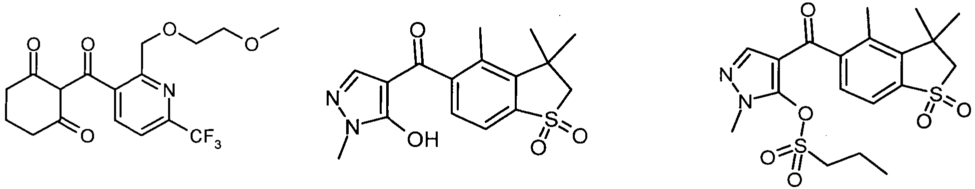

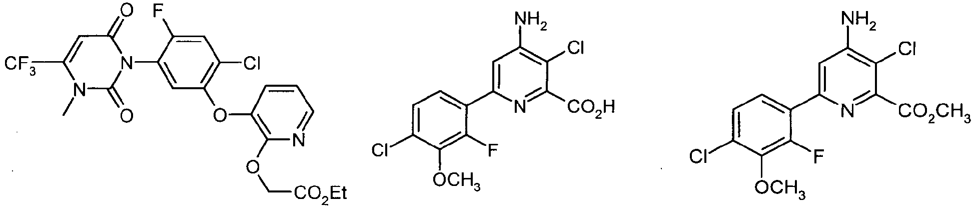

Als Beispiele für Pflanzenwuchsregulatoren seien ferner natürliche Pflanzenhormone wie Abszissinsäure, Jasmonsäure, Salicylsäure und deren Ester, Kinetin und Brassinosteroide genannt.

Weiter seien Substanzen genannt, die als Pflanzenwuchsregulatoren und/oder Pflanzenstärkungsmittel wirken können, um den Einfluss von Stressfaktoren wie Hitze, Kälte, Trockenheit, Salz, Sauerstoffmangel oder Überschwemmung auf das Pflanzenwachstum zu mindern. Hier seien beispielhaft genannt Glycinbetain (Betain), Cholin, Kaliumphosphat oder andere Phosphatsalze, sowie Silikate.

Als Beispiele für Pflanzennährstoffe seien übliche anorganische oder organische Dünger zur Versorgung von Pflanzen mit Makro- und/oder Mikronährstoffen genannt.

Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dode-morph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des synepimeren Razemates 1 RS,4SR,9RS und des antiempimeren Razemates 1 RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (synepimeres Razemat 1 RS,4SR,9RS), Isopyrazam (synepimeres Enantiomer 1R,4S,9R), Iso-pyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]-amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethyl-phenoxy)methyl]phenyl}-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfe-nazol, Diethofencarb, Ethaboxam, Fluopicolid, Fuberidazol, Pencycuron, Thiabendazol, Thi-ophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasti-cidin-S, Cyprodinil, Kasugamycin, Kasugamycin Hydrochlorid Hydrat, Mepanipyrim, Pyri-methanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flu-morph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, lodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kirala-xyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfa-mide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropylmethoxy)¬imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}¬piperidin-4-yl)-N-[(1R)-1,2,3,4-tetra-hydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaph¬thalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethiny)bipheny)-2-yl)-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dime¬thyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valinamid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Alle genannten Fungizide (1) bis (16) können, wenn sie aufgrund ihrer funktionellen Gruppen dazu imstande sind, gegebenenfalls mit geeigneten Basen oder Säuren Salze bilden.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie beispielsweise Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder
   Organophosphate, z.B. Acephate, Azamethiphos, Azinphosethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphosmethyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise
   Cyclodienorganochlorine, z.B. Chlordane und Endosulfan; oder
   Phenylpyrazole (Fiprole), z.B. Ethiprole und Fipronil.
(3) Natrium-Kanal-Modulatoren / Spannungsabhängige Natrium-Kanal-Blocker, wie beispielsweise
   Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)-Isomere)], Tralomethrin und Transfluthrin; oder
   DDT; oder Methoxychlor.
(4) Nikotinerge Acetylcholin-Rezeptor (nAChR) Agonisten, wie beispielsweise Neonikotinoide, z.B. Acetamiprid, Clothianidin, Dinotefuran, Imidacloprid, Nitenpyram, Thiacloprid und Thiamethoxam; oder
   Nikotin.
(5) Nikotinerge Acetylcholin-Rezeptor (nAChR) allosterische Aktivatoren, wie beispielsweise
   Spinosine, z.B. Spinetoram und Spinosad.
(6) Chlorid-Kanal-Aktivatoren, wie beispielsweise
   Avermectine/Milbemycine, z.B. Abamectin, Emamectin-benzoat, Lepimectin und Milbemectin.
(7) Juvenilhormon-Imitatoren, wie beispielsweise
   Juvenilhormon-Analoge, z.B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise
   Alkylhalide, z.B. Methylbromid und andere Alkylhalide; oder
   Chloropicrin; oder Sulfurylfluorid; oder Borax; oder Brechweinstein.
(9) Selektive Fraßhemmer, z.B. Pymetrozine; oder Flonicamid.
(10) Milbenwachstumsinhibitoren, z.B. Clofentezine, Hexythiazox und Diflovidazin; oder
   Etoxazole.
(11) Mikrobielle Disruptoren der Insektendarmmembran, z.B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1 Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder
   Organozinnverbindungen, z.B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartaphydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z.B. Fenazaquin, Fenpyroximate, Pyrimidifen, Pyridaben, Tebufenpyrad und Tolfenpyrad; oder
   Rotenone (Derris).
(22) Spannungsabhängige Natriumkanal-Blocker, z.B. Indoxacarb; oder Metaflumizone.
(23) Inhibitoren der Acetyl-CoA-Carboxylase, beispielsweise Tetron- und Tetramsäurederivate, z.B. Spirodiclofen, Spiromesifen und Spirotetramat.
(24) Komplex-IV-Elektronentransportinhibitoren, wie beispielsweise Phosphine, z.B. Aluminiumphosphid, Calciumphosphid, Phosphin und Zinkphosphid; oder
   Cyanid.
(25) Komplex-II-Elektronentransportinhibitoren, beispielsweise Cyenopyrafen.
(26) Ryanodinrezeptor-Effektoren, wie beispielsweise
   Diamide, z.B. Chlorantraniliprole und Flubendiamide.

Weitere Wirkstoffe mit unbekanntem Wirkmechanismus, wie beispielsweise Amidoflumet, Azadirachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und lodmethan; desweiteren Präparate auf Basis von Bacillus firmus (1-1582, BioNeem, Votivo) sowie folgende bekannte wirksame Verbindungen:
3-Brom-N-{2-brom-4-chlor-6-[(1-cyclopropylethyl)carbamoyl]phenyl}-1-(3-chlorpyridin-2-yl)-1H-pyrazol-5-carboxamid (bekannt aus WO2005/077934), 4-{[(6-Brompyrid-3-yl)methyl](2-fluorethyl)amino}furan-2(5H)-on (bekannt aus WO2007/115644), 4-{[(6-Fluorpyrid-3-yl)methyl](2,2-difluorethyl)amino}furan-2(5H)-on (bekannt aus WO2007/115644), 4-([(2-Chlor-1,3-thiazol-5-yl)methyl](2-fluorethyl)amino}furan-2(5H)-on (bekannt aus WO2007/115644), 4-{[(6-Chlorpyrid-3-yl)methyl](2-fluorethyl)amino}furan-2(5H)-on (bekannt aus WO2007/115644), 4-{[(6-Chlorpyrid-3-yl)methyl](2,2-difluorethyl)amino}furan-2(5H)-on (bekannt aus WO2007/115644), 4-{[(6-Chlor-5-fluorpyrid-3-yl)methyl](methyl)amino}furan-2(5H)-on (bekannt aus WO2007/115643), 4-{[(5,6-Dichlorpyrid-3-yl)methyl](2-fluorethyl)amino}furan-2(5H)-on (bekannt aus WO2007/115646), 4-{[(6-Chlor-5-fluorpyrid-3-yl)methyl](cyclopropyl)amino}furan-2(5H)-on (bekannt aus WO2007/115643), 4-{[(6-Chlorpyrid-3-yl)methyl](cyclopropyl)amino}furan-2(5H)-on (bekannt aus EP-A-0 539 588), 4-{[(6-Chlorpyrid-3-yl)methyl](methyl)amino}furan-2(5H)-on (bekannt aus EP-A-0 539 588), {[1-(6-Chlorpyridin-3-yl)ethyl](methyl)oxido-λ4-sulfanyliden}cyanamid (bekannt aus WO2007/149134) und seine Diastereomere {[(1R)-1-(6-Chlorpyridin-3-yl)ethyl](methyl)oxido-λ4-sulfanyliden}cyanamid (A) und {[(1S)-1-(6-Chlorpyridin-3-yl)ethyl](methyl)oxido-λ4-sulfanyliden}cyanamid (B) (ebenfalls bekannt aus WO2007/149134) sowie Sulfoxaflor (ebenfalls bekannt aus WO2007/149134) und seine Diastereomere [(R)-Methyl(oxido){(1R)-1-[6-(trifluormethyl)pyridin-3-yl]ethyl}-λ4-sulfanyliden]¬cyanamid (A1) und [(S)-Methyl(oxido){(1S)-1-[6-(trifluormethyl)pyridin-3-yl]ethyl}-λ4-sulfanyliden]cyanamid (A2), bezeichnet als Diastereomerengruppe A (bekannt aus WO 2010/074747, WO 2010/074751), [(R)-Methyl(oxido){(1S)-1-[6-(trifluormethyl)pyridin-3-yl]ethyl}-λ4-sulfanyliden]cyanamid (B1) und [(S)-Methyl(oxido){(1R)-1-[6-(trifluormethyl)pyridin-3-yl]ethyl}-λ4-sulfanyliden]cyanamid (B2), bezeichnet als Diastereomerengruppe B (ebenfalls bekannt aus WO 2010/074747, WO 2010/074751) und 11-(4-Chlor-2,6-dimethylphenyl)-12-hydroxy-1,4-dioxa-9-azadispiro[4.2.4.2]tetradec-11-en-10-on (bekannt aus WO2006/089633), 3-(4'-Fluor-2,4-dimethylbiphenyl-3-yl)-4-hydroxy-8-oxa-1-azaspiro[4.5]dec-3-en-2-on (bekannt aus WO2008/067911), 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat (bekannt aus WO2008/066153), 2-Cyan-3-(difluormethoxy)-N,N-dimethylbenzolsulfonamid (bekannt ausWO2006/056433), 2-Cyan-3-(difluormethoxy)-N-methylbenzolsulfonamid (bekannt aus WO2006/100288), 2-Cyan-3-(difluormethoxy)-N-ethylbenzolsulfonamid (bekannt aus WO2005/035486), 4-(Difluormethoxy)-N-ethyl-N-methyl-1,2-benzothiazol-3-amin-1,1-dioxid (bekannt aus WO2007/057407), N-[1-(2,3-Dimethylphenyl)-2-(3,5-dimethylphenyl)ethyl]-4,5-dihydro-1,3-thiazol-2-amin (bekannt aus WO2008/104503), {1'-[(2E)-3-(4-Chlorphenyl)prop-2-en-1-yl]-5-fluorspiro[indol-3,4'-piperidin]-1 (2H)-yl}(2-chlorpyridin-4-yl)methanon (bekannt aus WO2003/106457), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), (2,2,3,3,4,4,5,5-Octafluorpentyl)(3,3,3-trifluorpropyl)malononitril (bekannt aus WO2005/063094), (2,2,3,3,4,4,5,5-Octafluorpentyl)(3,3,4,4,4-pentafluorbutyl)malononitril (bekannt aus WO2005/063094), 8-[2-(Cyclopropylmethoxy)-4-(trifluormethyl)phenoxy]-3-[6-(trifluormethyl)pyridazin-3-yl]-3-azabicyclo[3.2.1]octan (bekannt aus WO2007/040280), 2-Ethyl-7-methoxy-3-methyl-6-[(2,2,3,3-tetrafluor-2,3-dihydro-1,4-benzodioxin-6-yl)oxy]chinolin-4-yl-methylcarbonat (bekannt aus JP2008/110953), 2-Ethyl-7-methoxy-3-methyl-6-[(2,2,3,3-tetrafluor-2,3-dihydro-1,4-benzodioxin-6-yl)oxy]chinolin-4-ylacetat (bekannt aus JP2008/110953), PF1364 (CAS-Reg.Nr. 1204776-60-2) (bekannt aus JP2010/018586), 5-[5-(3,5-Dichlorphenyl)-5-(trifluormethyl)-4,5-dihydro-1,2-oxazol-3-yl]-2-(1H-1,2,4-triazol-1-yl)benzonitril (bekannt aus WO2007/075459), 5-[5-(2-Chlorpyridin-4-yl)-5-(trifluormethyl)-4,5-dihydro-1,2-oxazol-3-yl]-2-(1H-1,2,4-triazol-1-yl)benzonitril (bekannt aus WO2007/075459), 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid (bekannt aus WO2005/085216), 4-{[(6-Chlorpyridin-3-yl)methyl](cyclopropyl)amino}-1,3-oxazol-2(5H)-on, 4-{[(6-Chlorpyridin-3-yl)methyl]¬(2,2-difluorethyl)amino}-1,3-oxazol-2(5H)-on, 4-{[(6-Chlorpyridin-3-yl)methyl](ethyl)amino}-1,3-oxazol-2(5H)-on, 4-{[(6-Chlorpyridin-3-yl)methyl](methyl)amino}-1,3-oxazol-2(5H)-on (alle bekannt aus WO2010/005692), NNI-0711 (bekannt aus WO2002/096882), 1-Acetyl-N-[4-(1,1,1,3,3,3-hexafluor-2-methoxypropan-2-yl)-3-isobutylphenyl]-N-isobutyryl-3,5-dimethyl-1H-pyrazol-4-carboxamid (bekannt aus WO2002/096882), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-1,2-diethylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin (bekannt aus WO2007/101369), 2-{6-[2-(5-Fluorpyridin-3-yl)-1,3-thiazol-5-yl]pyridin-2-yl}pyrimidin (bekannt aus WO2010/006713), 2-{6-[2-(Pyridin-3-yl)-1,3-thiazol-5-yl]pyridin-2-yl}pyrimidin (bekannt aus WO2010/006713), 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid (bekannt aus WO2010/069502), 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-1H-tetrazol-1-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid (bekannt aus WO2010/069502) und (1E)-N-[(6-Chlorpyridin-3-yl)methyl]-N'-cyan-N-(2,2-difluorethyl)ethanimidamid (bekannt aus WO2008/009360).

Die hier mit ihrem "common name" genannten Wirkstoffe sind bekannt und beispielsweise im Pestizidhandbuch ("The Pesticide Manual" 16th Ed., British Crop Protection Council 2012) beschrieben oder im Internet recherchierbar (z.B. http://www.alanwood.net/pesticides).

Bei den Pestiziden der Komponente g) kann es sich auch um eine Kombination von zwei oder von mehreren Pestiziden handeln. Solche Kombinationen sind insbesondere dann von Bedeutung, wenn es beispielsweise darum geht, das Wirkungsspektrum der Pestizid-Zusammensetzung zu verbreitern oder Resistenzen gegenüber bestimmte Pestiziden besser zu unterbinden.

Die Kombination von zwei oder mehreren Pestiziden in einer Formulierung ist ein schwieriges Unterfangen. Die Wirkstoffe sind üblicherweise nicht miteinander kompatibel und die wässrigen Mischungen daher nicht phasenstabil. Die erfindungsgemäßen Adjuvant-Zusammensetzungen eignen sich aber gut dazu, um solche grundsätzlich inkompatiblen Zusammensetzungen zu stabilisieren.

In einer weiteren Ausführungsform der Erfindung enthalten die erfindungsgemäßen Pestizid-Zusammensetzungen daher mindestens zwei wasserlösliche Pestizide der Komponente g).

Bei der Formulierung von wässrigen Pestizid-Zusammensetzungen ist man bestrebt, die Zusammensetzung mit einer möglichst hohen Konzentration an Wirkstoff zu beladen. Das reduziert Verpackungs-, Transport-, Lager- und Entsorgungskosten. Daher sollte eine Adjuvant-Zusammensetzung in der Lage sein, stabile hochbeladene Pestizid-Zusammensetzungen, sogenannte "High-Load-Formulierungen", zu ermöglichen. Dies gelingt mit den Alkylglucamiden der Formel (I) überraschend gut.

In einer bevorzugten Ausführungsform der Erfindung beträgt die Menge des einen oder der mehreren wasserlöslichen Pestizide der Komponente g) in den erfindungsgemäßen Zusammensetzungen mehr als 100 g/l, bevorzugt mehr als 200 g/l und besonders bevorzugt mehr als 300 g/l. Diese Mengenangaben beziehen sich auf das Gesamtgewicht der erfindungsgemäßen Pestizid-Zusammensetzung und im Falle von Pestiziden, die in Form ihrer wasserlöslichen Salze eingesetzt werden (wie üblicherweise beispielsweise Glyphosat oder 2,4-D), auf die Menge an freier Säure, dem sogenannten Säureäquivalent ("acid equivalent", a.e.).

In einer weiteren bevorzugten Ausführungsform der Erfindung beträgt die Menge des einen oder der mehreren Alkylglucamide der Formel (I) in den erfindungsgemäßen Pestizid-Zusammensetzungen 20 bis 250 g/l, bevorzugt 40 bis 200 g/l und besonders bevorzugt 50 bis 150 g/l. Diese Mengenangaben beziehen sich auf die gesamte Menge der erfindungsgemäßen Pestizid-Zusammensetzung.

Üblicherweise werden die Alkylglucamide der Formel (I) in Form von Lösungen eingesetzt. Zur Klarstellung sei hier erwähnt, dass sich die oben genannten Mengenangaben dabei auf den Aktivgehalt der Alkylglucamide der Formel (I) in der Lösung beziehen.

Ein besonders wichtiges Kriterium für die Lagerstabilität von wässrigen Pestizid-Zusammensetzungen, wie beispielsweise Glyphosat- und 2,4-D-Formulierungen, ist die Phasenstabilität. Eine Zusammensetzung wird dann als ausreichend phasenstabil angesehen, wenn sie über einen weiten Temperaturbereich homogen bleibt und wenn es nicht zur Ausbildung von zwei oder mehreren getrennten Phasen oder zu Ausfällungen (Bildung einer weiteren festen Phase) kommt. Phasenstabilität ist sowohl bei erhöhter Temperatur, wie sie beispielsweise bei der Lagerung in der Sonne oder in warmen Ländern auftreten kann, als auch bei niedriger Temperatur, wie beispielsweise im Winter oder in kalten klimatischen Regionen, die entscheidende Voraussetzung für eine lagerstabile Formulierung.

Die erfindungsgemäßen Pestizid-Zusammensetzungen zeichnen sich dadurch aus, dass sie auch bei einer Temperatur von vorzugsweise größer 55 °C, besonders bevorzugt von größer 70 °C und insbesondere bevorzugt von größer 80°C phasenstabil sind.

Außerdem zeichnen sich die erfindungsgemäßen Pestizid-Zusammensetzungen dadurch aus, dass sie auch bei einer Temperatur von vorzugsweise kleiner 10 °C, besonders bevorzugt von kleiner 0 °C und insbesondere bevorzugt von kleiner -10 °C phasenstabil sind.

Der pH-Wert der Pestizid-Zusammensetzungen liegt üblicherweise im Bereich von 3,5 bis 8,5, bevorzugt bei 4,0 bis 8,0 und besonders bevorzugt bei 4,5 bis 6,5 (gemessen als 1 gew.-%ige wässrige Verdünnung). Der pH-Wert wird primär bestimmt durch die pH-Werte der Lösungen der wässrigen Pestizide, die als Salze schwacher Säuren vorliegen. Durch Zugabe von Säuren oder Basen kann der pH-Wert auf einen anderen Wert abweichend von dem ursprünglichen pH-Wert der Mischung eingestellt werden.

Die erfindungsgemäßen Pestizid-Zusammensetzungen können neben Komponenten a) bis d), g) und gegebenenfalls h) ein oder mehrere weitere Hilfsstoffe f) enthalten, wobei es sich bei diesen beispielsweise um Konservierungsmittel, Tenside, Entschäumer, funktionelle Polymere oder zusätzliche Adjuvants handeln kann.

Als Konservierungsmittel können organische Säuren und ihre Ester, beispielsweise Ascorbinsäure, Ascorbinpalmitat, Sorbat, Benzoesäure, Methyl-und Propyl-4-hydroxybenzoat, Propionate, Phenol, beispielsweise 2-Phenylphenat, 1,2 Benzisothiazolin-3-on, Formaldehyd, schwefelige Säure und deren Salze eingesetzt werden.

Bei den Tensiden kann es sich generell um alle mit der Zusammensetzung kompatiblen nichtionischen, amphoteren, kationischen oder anionische Tenside handeln.

Beispiele für nicht-ionische Tenside sind Ethoxylate und Alkoxylate von längerkettigen aliphastischen oder aromatischen Alkoholen, Fettaminethoxylate, längerkettige Etheraminalkoxylate, (gegebenenfalls ethoxylierte) Sorbitanester, Alkylpolyglycoside. Geeignete amphotere Tenside sind u.a. langkettige Alkyldimethylbetaine oder Alkyldimethylaminoxide, oder Alkyldimethylaminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten geeignet. Unter langkettig werden lineare oder verzweigte Kohlenwasserstoffketten mit mindestens 6 und maximal 22 Kohlenstoffatomen geeignet.

Als Entschäumer eignen sich Fettsäurealkylesteralkoxylate, Organopolysiloxane wie Polydimethylsiloxane und deren Gemische mit mikrofeiner, gegebenenfalls silanierter Kieselsäure; Perfluoralkylphosphonate und -phosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Bei den funktionellen Polymeren, die in der erfindungsgemäßen Pestizid-Zusammensetzung enthalten sein können, handelt es sich hochmolekulare Verbindungen synthetischen oder natürlichen Ursprungs mit einer Molmasse von größer als 10.000. Die funktionellen Polymere können beispielsweise als Anti-Drift-Agent wirken oder die Regenfestigkeit steigern.

In einer weiteren bevorzugten Ausführungsform der Erfindung enthalten die erfindungsgemäßen Pestizid-Zusammensetzungen neben den Komponenten a) bis g) ein oder mehrere weitere Adjuvants, wie sie bekanntermaßen in wässrigen Pestizid-Zusammensetzungen verwendet werden können.

Bevorzugt sind dies Fettaminethoxylate, Etheraminethoxylate, Alkylbetaine oder Amidoalkylbetaine, Aminoxide oder Amidoalkylaminoxide, Alkylpolylglycoside oder Copolymere aus Glycerin, Kokosfettsäure und Phthalsäure.

Diese Adjuvants sind aus der Literatur als Adjuvants in wässrigen Pestizid-Zusammensetzungen bekannt und beispielsweise in der WO2009/029561 beschrieben.

In einer weiteren bevorzugten Ausführungsform der Erfindung liegen die erfindungsgemäßen Pestizid-Zusammensetzungen als Konzentrat-Formulierungen vor, die vor dem Gebrauch verdünnt werden, insbesondere mit Wasser (beispielsweise "ready-to-use"-, "in-can"-oder "built-in"-Formulierungen), und enthalten das eine oder die mehreren wasserlöslichen Pestizide der Komponente g) im Allgemeinen in Mengen von 5 bis 80 Gew.-%, bevorzugt von 10 bis 70 Gew.-% und besonders bevorzugt von 20 bis 60 Gew.-%, das eine oder die mehreren Alkylglucamide der Formel (I) in Mengen von 1 bis 25 Gew.-, bevorzugt von 2 bis 20 Gew.-%, besonders bevorzugt von 3 bis 15 Gew.-%, das Ammoniumsalz b) in Mengen von 5 bis 50 Gew.-%, bevorzugt 10 bis 40 Gew.-%, besonders bevorzugt 10 bis 35. Gew.-%, und Propylenglykol c) in Mengen von 1 bis 30 Gew.-%, bevorzugt von 2 bis 10 Gew.-%, besonders bevorzugt 2 bis 5 Gew.-%. Diese Mengenangaben beziehen sich auf die gesamte Konzentrat-Formulierung und im Falle von Pestiziden, die in Form ihrer wasserlöslichen Salze eingesetzt werden, auf die Menge an freier Säure, dem sogenannten Säureäquivalent ("acid equivalent", a.e.).

Die erfindungsgemäßen Pestizid-Zusammensetzungen werden vorzugsweise in Form von Spritzbrühen auf die Felder ausgebracht. Dabei werden die Spritzbrühen durch Verdünnung von Konzentrat-Formulierungen mit einer definierten Menge Wasser hergestellt.

In einer weiteren bevorzugten Ausführungsform der Erfindung liegen die erfindungsgemäßen Pestizid-Zusammensetzungen als Spritzbrühen vor und enthalten 0,001 bis 10 Gew.-%, bevorzugt 0,02 bis 3 Gew.-% und besonders bevorzugt 0,025 bis 2 Gew.-% des einen oder der mehreren wasserlöslichen Pestizide der Komponente g) und 0,001 bis 3 Gew.-%, bevorzugt 0,005 bis 1 Gew.-% und besonders bevorzugt 0,01 bis 0,5 Gew.-% des einen oder der mehreren Alkylglucamide der Formel (I). Die Menge der erfindungsgemäß eingesetzten Ammoniumsalze beträgt im Allgemeinen 0,05 bis 2,00, bevorzugt 0,10 bis 1,50, besonders bevorzugt 0,20 bis 1,00 Gew.-%, bezogen auf die Spritzbrühe. Der Gehalt an den Glykolverbindungen der Komponente c) beträgt im Allgemeinen nicht mehr als 0,20 Gew.-%, bezogen auf die Spritzbrühe. Die genannten Mengenangaben beziehen sich auf die gesamte Spritzbrühe und im Falle von Pestiziden, die in Form ihrer wasserlöslichen Salze eingesetzt werden, auf die Menge an freier Säure, dem sogenannten Säureäquivalent ("acid equivalent", a.e.).

Die Erfindung betrifft weiterhin die Verwendung der erfindungsgemäßen Pestizid-Zusammensetzungen zur Kontrolle und/oder zur Bekämpfung von Unkraut, Pilzerkrankungen oder Insektenbefall. Bevorzugt ist die Verwendung der erfindungsgemäßen Zusammensetzungen zur Kontrolle und/oder zur Bekämpfung von Unkraut.

Diese Verwendungen können vorzugsweise auch im sogenannten Tank-mix-Verfahren stattfinden. Hierbei können also das oder die mehreren wasserlöslichen Pestizide der Komponente g) und die Komponenten a) bis d) sowie zusätzlich Wasser auch in Form einer sogenannten "Tank-mix"- Zubereitung vorliegen. In einer derartigen Zubereitung liegen sowohl das oder die mehreren wasserlöslichen Pestizide als auch die Komponenten a) bis d), letztere gegebenenfalls zusammen mit weiteren Adjuvants, getrennt voneinander vor. Beide Zubereitungen werden vor dem Ausbringen, in der Regel kurz vorher, miteinander vermischt, wobei eine erfindungsgemäße Pestizid-Zusammensetzung entsteht.

### Ausführungsbeispiele

### Herstellung

Die Einsatzkonzentrationen in dem Test beziehen sich immer auf das getestete Produkt und für das lineare C8/10 Glucamid selbst ist immer die stabile Lösung mit 50% Aktivsubstanzgehalt in Wasser/Propylenglykol gemeint.

Die Lösung mit 50 % Aktivsubstanz C8/10 Glucamid wurde folgendermaßen hergestellt: Zunächst wird nach EP 0 550 637 C8/10 Fettsäuremethylester (Octansäuremethylester: Decansäuremethylester = 55:45) mit N-Methylglucamin in Gegenwart von 1,2-Propylenglykol als Lösungsmittel umgesetzt und als Feststoffbestehend aus 90 % Aktivsubatanz und 10 % 1,2-Propylenglykol erhalten. Dieser Feststoff wurde bei 40 bis 50 °C in Wasser gelöst, so dass sich eine Lösung mit 50 % Gehalt an linearem C8/10 Glucamid ergab. Es handelt sich um eine klare, farblose Lösung.

### Steigerung der Aufnahme systemischer Wirkstoffe bzw. Herbizide und Testsysteme zur Messung der Penetrationsförderung von Wirkstoffen

Tenside können auch die Aufnahme von (Wirk-)Stoffen durch Membranen wie Haut, Folien oder die pflanzliche Kutikula fördern. Als sogenannte "Finite-dose" - Applikation ist für die einmalige Applikation oder Auftragung einer Lösung, Creme, Gel etc. auf eine Membran bekannt, dass die Wirkstoffaufnahme auch nach erfolgter Benetzung durch manche Zusatzstoffe wie Tenside beeinflussbar ist. Dieser Effekt ist unabhängig von der Grenzflächenwirkung in Wasser, oft stark konzentrationsabhängig und findet größtenteils nach Verflüchtigung von Wasser und eventuell anwesenden Lösungsmitteln statt als Folge der Wechselwirkung z.B. mit Wirkstoff, Membran und Umweltfaktoren. Für verschiedene Tenside wird nach Zusatz zu Wirkstoffzubereitungen beobachtet, dass die Penetration eines bestimmten Wirkstoffes durch manche Tenside enorm gefördert wird während andere völlig unwirksam sind (Cronfeld, P, Lader, K. Baur, P. (2001). Classification of Adjuvants and Adjuvant Blends by Effects on Cuticular Penetration, Pesticide Formulations and Application Systems: Twentieth Volume, ASTM STP 1400, A. K. Viets, R. S. Tann, J. C. Mueninghoff, Edsl, American Society for Testing and Materials, West Conshohocken, PA 2001).

Das von der Tensidwirkung unabhängige Potential des C8/10 Glucamids, die Blattaufnahme von agrochemischen Wirkstoffen zu fördern wurde in Membranpenetrations-Versuchen mit Blattkutikeln von Apfel oder Birne bestimmt. Die pflanzliche Kutikula stellt eine lipophile Löslichkeitsmembran (Lipidmembran) ohne Poren oder Löcher dar und die beschrieben Ergebnisse werden mit diesen oder anderen Elektrolytwirkstoffen auch für andere nicht poröse lipophile Löslichkeitsmembranen erwartet. Das Prinzip der Methode ist veröffentlicht (z.B. WO-A-2005/194844; Baur, 1997; Baur, Grayson und Schönherr 1999; Baur, Bodelon und Lowe, 2012) und nur die Spezifika und methodische Abweichungen werden nachfolgend erklärt. Die Blattkutikeln wurden auf die in der Literatur beschriebene Weise von Apfelblättern von Feldbäumen einer kommerziellen Kernobstanlage in der Nähe von Frankfurt am Main im Jahr 2011 enzymatisch isoliert. Die zunächst an der Luft getrockneten stomatafreien Kutikeln wurden in Diffusionszellen aus Edelstahl eingebaut. Nach Applikation auf die ursprüngliche Blattoberseite und Verdunstung der Testflüssigkeit, d.h. der wässrigen Zubereitungen der Wirkstoffe ohne oder mit den C8/10 Glucamid-haltigen Spritzflüssigkeiten oder Vergleichsmitteln wurden die Diffusionszellen in thermostatisierte Blöcke überführt und mit wässriger Flüssigkeit gefüllt. Als Wasser zum Ansetzen der wässrigen Testflüssigkeiten wurde lokales Leitungswasser (bekannter Zusammensetzung) verwendet. In regelmäßigen Abständen wurden Proben genommen und abhängig vom Testsystem entweder per HPLC oder Szintillationsmessung der penetrierte Wirkstoffanteil bestimmt. Im System mit radioaktiv markierten Wirkstoffen (Dicamba, 2,4-D, MCPA) war die wässrige Flüssigkeit eine Phospholipidsuspension und die gesamte Menge wurde ausgetauscht. Bei allen anderen HPLC-Variantenwurde nur ein Aliquot entnommen. Während des Versuchs waren die Temperatur im System (Block, Diffusionszellen, Flüssigkeiten etc.) und die Luftfeuchtigkeit über dem Spritzbelag auf der Kutikula exakt bekannt und kontrolliert. In den Versuchen wurde die relative Luftfeuchte durchgehend konstant bei 56% relativer Luftfeuchte (Luft über übersättigtem Calciumnitrat) bzw. 60% relativer Luftfeuchte (Taupunktmethode) gehalten, die Temperatur war entweder durchgehend konstant bei 25°C bzw. RT 22(±1)°C, oder nach 24h Stunden wurde die Temperatur um 10°C erhöht. Die analytische Bestimmung erfolgte entweder mittels HPLC (1290 Infinity, Agilent) oder Analyse der Radioaktivität (Tricarb, Perkin Elmer). HPLC Trennung wurde mit einer Kinetex Säule 30x2,1 mm, 2.6µ C18 100A (Phenomenex) mit 20µl Aliquotnahme als Injektionsvolumen zu den angegeben Zeiten. Bei den Tests mit radioaktiv markierten Stoffen war das Problemvolumen 0.5 ml und die Messung erfolgte über Szintillation (Baur, Grayson und Schönherr 1999). Es werden jeweils die geometrischen Mittelwerte der Penetration für intakte Membranen zu den mittleren Messzeiten gegeben. Je Variante (Wirkstoff x Testadditiv/-formulierung) wurden 7-8 Wiederholungen angesetzt. Der Variationskoeffizient lag meist unter 35% kann aber in Einzelfällen bis 50% betragen, was für zahlreiche Pflanzen eine typische biologische Variabilität für die Penetration ist (Baur, 1997).

Beispielhaft wurden folgende Adjuvantformulierungen (F) mit weit unterschiedlichem Verhältnis von C8/10 Glucamid und Ammoniumsulfat getestet. Die Spritzflüssigkeit war lokales Leitungswasser mit für Herbizid-Elektrolyten relevanten und potentiell antagonistischen 85 ppm Ca und 16 ppm Mg. Dieses wurde zum Teil mit Calcium angereichert, so dass eine Konzentration von 177ppm Ca erreicht wurde, was sehr hartem Wasser entspricht. Der Penetrationstest ist sehr gut geeignet, um den Antagonismus von Ca für die Penetration von Säuren zu messen (s. Uhlig, Baur und Schönherr 1998). Dieser Effekt wurde mit den Formulierungen mit Ammoniumsulfat gemessen. Gleiche Effekte werden mit Ammoniumcitrat, -oxalat und anderen, schwerlösliche Ca-Salze bildenden Anionen erwartet. Weit weniger bedeutsam aber ebenfalls relevant sind Antagonismen von Eisen oder Magnesium, die ebenfalls mit den Formulierungen F1-7 neutralisiert werden können. Bei weicherem Wasser (75ppm Ca) kann eine Wirkungssteigerung auch mit anderen Ammoniumsalzen wie Nitrat, Chlorid usw. oder auch mit Ammoniumnitrat-Harnstoff Kombinationen erzielt werden.

### Formulierungen

- F1: 45 Gew.-% lineares C8/10 Glucamid, 5 Gew.-% Propylenglykol und 20 Gew.-%
Ammoniumsulfat, Rest Wasser
- F2: 10 Gew.-% lineares C8/10 Glucamid, 25 Gew.-% Ammoniumsulfat 10 Gew.-% Fructose-Glucose Syrup (55 Gew.-% Fructose, 42 Gew.-% Glucose), 3 Gew.-% Propylenglykol, 0,03 Gew.-% Entschäumer (Momentive SAG 1572 SGS), Rest Wasser
- F3: 10 Gew.-% lineares C8/10 Glucamid, 25 Gew.-% Ammoniumsulfat 10 Gew.-% Polyglycerin (mit 7-10 Glycerinmonomeren), 3 Gew.-% Propylenglykol, 0,03 Gew.-% Entschäumer (Momentive SAG 1572 SGS), Rest Wasser
- F4: 5 Gew.-% lineares C8/10 Glucamid, 35 Gew.-% Ammoniumsulfat 10 Gew.-% Fructose-Glucose Syrup (55 Gew.-% Fructose, 42 Gew.-% Glucose), 2,5 Gew.-% Propylenglykol, 0,03 Gew.-% Entschäumer (Momentive SAG 1572 SGS), Rest Wasser
- F5: 15 Gew.-% lineares C8/10 Glucamid, 20 Gew.-% Ammoniumsulfat, 2 Gew.-% Propylenglykol, 0,03 Gew.-% Entschäumer (Momentive SAG 1572 SGS), Rest Wasser
- F6: ist eine 2,5 zu 1 Mischung von F1 und Synergen GL8 (einem Alkylhydroxyethyl-dimethylammoniumchlorid, Clariant)
- F7: ist eine 3 zu 2 Mischung von F1 und Synergen GL8 (einem Alkylhydroxyethyldimethylammoniumchlorid, Clariant)
- F8: ist ein Ansatz des lineares C8/10 Glucamides in 25 Gew.-% AHL (Ammoniumnitrat Harnstoff Lösung, Piasan 28) bei 3 g/l lineares C8/10 Glucamid

Die Formulierungen F1-8 entsprechen wasserhaltigen und wassermischbaren SL Formulierungen, welche in jeder Beziehung stabil sind. Das Glucamid selbst und die eingestellten Konzentrationen machen kein Biozid nötig, die Formulierungen gehen nach Lagerung bei -20°C und Ausfällen von Ammoniumsulfat beim Auftauen vollständig wieder in Lösung. Gängige Lagertests (etwa 8 Wochen bei 40°C oder 2 Wochen bei 54°C) ändern die Eigenschaften nicht. Die Formulierungen lassen sich mit allen Wasserqualitäten (CIPAC A,C,D, Leitungswasser, entsalztes Wasser problemlos verdünnen).

### Wirkungsbeispiele für Wirkstoffe

### Testsubstanzen Penetration:

MCPA, lodosulfuron, 2,4-D (DMA), Sulcotrione, Mesotrione, Clethodim,
Dicamba (Säure und DGA), Saflufenacil, Tembotrione
Wirkungsstoffbeispiele für die Penetrationssteigerung mit linearem C8/10Glucamid im Vergleich zum Wirkstoff bzw. einer wirkstoffhaltigen Formulierung allein und/oder anderen Vergleichsmitteln. Die Standardspritzflüssigkeit war Leitungswasser mit 85 ppm Ca und 16 ppm Mg. Es wird jeweils das Mittel allein und mit Zusatz der Testsubtanz gezeigt.

Die nachfolgenden Beispiele mit wichtigen herbiziden Wirkstoffen zeigen jeweils die hervorragende Eignung der Formulierungen von linearem C8/10Glucamid mit Ammoniumsulfat die Penetration unterschiedlichster Elektrolyt-Wirkstoffe (hier Herbizide) zu fördern. Die kann zu signifikant besserer Unkrautkontrolle, schnellerer Regenfestigkeit und besserer Ausnutzung des Potentials von Wirkstoffen und in Einzelfällen auch zur Wirkstoffeinsparung führen.

**Tabelle 1 Penetration von MCPA (Kalium Salz) 1 g/l Wirkstoffkonzentration in Spritzflüssigkeit)**

| Testprodukt (Konz.) | Mittlere Penetration* in % nach Zeit (n= 4-8) | |
|---|---|---|
| Konzentration Spritzbrühe | 1.0 g/l ai | |
| | 4 Std | 1 Tag |
| MCPA Kalium allein | 1.6 | 7.2 |
| F1 0.5% erfindungsgemäß) | 11.3 | 31.6 |
| F2 0.5% (erfindungsgemäß) | 9.2 | 31.1 |
| F3 0.5% (erfindungsgemäß) | 9.6 | 32.3 |

| | | |
|---|---|---|
| * 25°C/56% rel. Luftfeuchte | | |

Die erfindungsgemäßen Formulierungen F1-3 führen zu einer 4 bis 7- fachen Erhöhung der Penetration von MCPA-Kalium nach 4 Stunden bzw. einem Tag.

**Tabelle 2 Penetration von 2,4-D DMA** mit antagonistischem Calcium bei 177 ppm Ca simulierend sehr hartes Wasser**

| (5 g/l Wirkstoffkonzentration 2,4-D DMA in Spritzflüssigkeit) | | |
|---|---|---|
| Testprodukt (Konz.) | Mittlere Penetration* in % nach Zeit (n= 4-8) | |
| Konzentration Spritzbrühe | 5 g/l ai | |
| | 4 Std | 1 Tag |
| 2,4-D DMA allein | 0.2 | 0.3 |
| F2 0.5% (erfindungsgemäß) | 15.4 | 14.4 |
| F4 0.5% (erfindungsgemäß) | 21.4 | 48.4 |
| F5 0.5% (erfindungsgemäß) | 4.8 | 15.0 |
| F6 0.35% (erfindungsgemäß) | 22.0 | 50.0 |

| | | |
|---|---|---|
| * 25°C/56% rel. Luftfeuchte ** DMA, Dimethylamin | | |

Die erfindungsgemäßen Formulierungen F2-6 führen zu einer mehr als 10-fachen Erhöhung der Penetration von 2,4-D DMA nach 4 Stunden bzw. einem Tag. F6 zeigt bei geringerer Einsatzkonzentration einen besseren Effekt. Dies zeigt eine synergistische Wirkung, da das Synergen GL8 (30% in F6) selbst keinen Effekt auf die Penetration zeigt.

**Tabelle 3 Penetration von Dicamba (Säure) mit Leitungswasser enthaltend 85 ppm Ca**

| (1.0 g/l Wirkstoffkonzentration 2,4-D DMA in Spritzflüssigkeit) | | |
|---|---|---|
| Testprodukt (Konz.) | Mittlere Penetration* in % nach Zeit (n= 4-8) | |
| Konzentration Spritzbrühe | 1.0 g/l ai | |
| | 5 Std | 1 Tag |
| Dicamba (Säure) allein, in normalem Leitungswasser (85ppm) | 4.4 | 12.4 |
| F1 0.2%(erfindungsgemäß) | 20.0 | 42.5 |
| Genamin 267 (kommerzielles Talgaminethoxylat mit 15 EO) | 7.0 | 26.2 |

| | | |
|---|---|---|
| * 20°C/60% rel. Luftfeuchte | | |

Die erfindungsgemäße Formulierung F1 führt zu einer 3-4.5 fachen Erhöhung der Penetration von Dicamba Säure nach 5 Stunden bzw. einem Tag. Dies ist schneller und mehr als mit einem praxisüblichen Talgaminethoxylat. Da Dicamba eine signifikante Flüchtigkeit besitzt, kann durch die verbesserte Aufnahme auch eine Verringerung der Verflüchtigung und der Deposition in Nichtzielflächen unterdrückt werde.

**Tabelle 4 Penetration von Dicamba DGA** mit antagonistischem Calcium bei 177 ppm Ca simulierend sehr hartes Wasser**

| (2.5 g/l Wirkstoffkonzentration Dicamba DGA in Spritzflüssigkeit) | | |
|---|---|---|
| Testprodukt (Konz.) | Mittlere Penetration* in % nach Zeit (n= 4-8) | |
| Konzentration Spritzbrühe | 2.5 g/l ai | |
| | 3 Std | 1 Tag |
| Dicamba DGA SL500** allein, in normalem Leitungswasser (85ppm) | 0.9 | 14.3 |
| Dicamba DGA SL500** allein, in Leitungswasser (177ppm) | 0.2 | 3.8 |
| F1 0.5% (erfindungsgemäß) | 9.7 | 28.9 |
| F2 0.5% (erfindungsgemäß) | 8.4 | 34.3 |
| F2 0.75% (erfindungsgemäß) | 8.9 | 39.8 |
| F3 0.5% (erfindungsgemäß) | 6.7 | 34.4 |
| F4 0.5% (erfindungsgemäß) | 3.3 | 39.7 |
| Premium Oil Concentrate 0.5% (kommerziell) | 0.3 | 4.6 |

| | | |
|---|---|---|
| * 20°C/60% rel. Luftfeuchte ** DGA, Diglycolamin, aus einer Soluble Liquid Formulierung der kommerziellen Produkte Clarity® (BASF) oder Sterling® Blue (Winfield) | | |

Alle Formulierungen mit dem linearen C8/10 Glucamides förderten die Penetration signifikant. Die Penetrationsförderung trat umso schneller ein je höher die Konzentration an linearen C8/10 Glucamid (F1 > F2∼F3 > F4). Das Crop Oil Concentrate hatte bei dem harten Wasser trotz des doppelt so hohen Additivgehaltes gar keinen Effekt.

**Tabelle 5 Penetration von Sulcotrione (0.2 g/l Wirkstoffkonzentration in Spritzflüssigkeit)**

| Testprodukt (Konz.) | Mittlere Penetration* in % nach Zeit (n= 4-8) | |
|---|---|---|
| Konzentration Spritzbrühe | 0.2 g/l ai | |
| | 5 Std | 1 Tag |
| Sulcotrione allein | <1 | <1 |
| F1 0.25%(erfindungsgemäß) | 1.8 | 8.7 |
| F1 0.5% (erfindungsgemäß) | 3.5 | 19.5 |

| | | |
|---|---|---|
| * 20°C/60% rel. Luftfeuchte | | |

Die erfindungsgemäße Formulierung F1 führt zu einer konzentrationsabhängigen mehr als 8-fachen Erhöhung der Penetration von Sulcotrione nach 5 Stunden bzw. einem Tag.

**Tabelle 6 Penetration von Mesotrione (0.3 g/l Wirkstoffkonzentration in Spritzflüssigkeit)**

| Testprodukt (Konz.) | Mittlere Penetration* in % nach Zeit (n= 4-8) | |
|---|---|---|
| Konzentration Spritzbrühe | 0.3 g/l ai | |
| | 1 Tag* | 2 Tage* |
| SC480 (Clariant) | <1 | <1 |
| F1 0.25% (erfindungsgemäß) | 12.9 | 22.9 |
| F1 0.5% (erfindungsgemäß) | 11.4 | 19.8 |

| | | |
|---|---|---|
| * 25°C/60% rel. Luftfeuchte, **n. 1 Tag Erhöhung auf 35°C/60% rel. Luftfeuchte | | |

Die erfindungsgemäße Formulierung F1 führt zu einer konzentrationsabhängigen mehr als 10-fachen Erhöhung der Penetration von Mesotrione nach 1 Tag bzw. 2 Tagen.

**Tabelle 7 Penetration von Mesotrione (0.3 g/l Wirkstoffkonzentration in Spritzflüssigkeit)**

| Testprodukt (Konz.) | Mittlere Penetration in % nach Zeit (n= 4-8) | |
|---|---|---|
| Konzentration Spritzbrühe | 0.3 g/l ai | |
| | 1 Tag* | 2 Tage** |
| SC480 (Clariant) | 1.9 | 3.0 |
| F1 0.3% (erfindungsgemäß) | 3.8 | 12.8 |
| F2 0.5% (erfindungsgemäß) | 2.6 | 7.9 |
| F2 1.0% (erfindungsgemäß) | 16.4 | 33.9 |
| F3 0.75% (erfindungsgemäß) | 11.1 | 23.3 |
| F4 0.5% (erfindungsgemäß) | 17.0 | 17.1 |
| F7 0.5% (erfindungsgemäß) | 21.5 | 33.6 |

| | | |
|---|---|---|
| * 25°C/60% rel. Luftfeuchte, ** n. 1 Tag Erhöhung auf 35°C/60% rel. Luftfeuchte | | |

Alle erfindungsgemäßen getesteten Formulierungen waren effektiv mit sehr stark konzentrationsabhängiger Steigerung der Penetration von Mesotrione im Fall von F2 und sehr gutes Ergebnis für F1 schon bei 0,3%.

**Tabelle 8 Penetration von Clethodim (0.75 g/l Wirkstoffkonzentration in Spritzflüssigkeit)**

| Testprodukt (Konz.) | Mittlere Penetration* in % nach Zeit (n= 4-8) | |
|---|---|---|
| Konzentration Spritzbrühe | 0.75 g/l ai | |
| | 12 Std. | 1 Tag. |
| Status® EC240 (kommerziell) | 3.5 | 4.8 |
| F1 0.5% (erfindungsgemäß) | 14.1 | 15.8 |

| | | |
|---|---|---|
| * 25°C/56% rel. Luftfeuchte | | |

Die erfindungsgemäße Formulierung F1 führt zu einer 3 bis 4-fachen Erhöhung der Penetration von Clethodim nach 12 Stunden bzw. 1 Tag.

**Tabelle 9 Penetration von Saflufenacil** (0.5 g/l Wirkstoffkonzentration in Spritzflüssigkeit)**

| Testprodukt (Konz.) Konzentration Spritzbrühe | Mittlere Penetration* in % nach Zeit (n= 4-8) | | |
|---|---|---|---|
| | 0.5 g/l ai | | |
| | 12 Std | 1 Tag | 2 Tage |
| Sharpen® SC285 + 0.5% AMS (kommerziell) | 0.4 | 0.5 | 0.8 |
| F1 0.5% (erfindungsgemäß) | 11.1 | 16.6 | 25.6 |

| | | | |
|---|---|---|---|
| * 25°C/56% rel. Luftfeuchte ** Blattkutikeln von Birne | | | |

Die erfindungsgemäße Formulierung F1 führt zu einer mehr als 10-fachen Erhöhung der Penetration von Saflufenazil nach 12 Stunden bzw. 1-2 Tagen.

**Tabelle 10 Penetration von lodosulfuron (0.1 g/l Wirkstoffkonzentration in Spritzflüssigkeit)**

| Testprodukt (Konz.) | Mittlere Penetration in % nach Zeit (n= 4-8) | |
|---|---|---|
| Konzentration Spritzbrühe | 0.1 g/l ai | |
| | 1 Tag* | 2 Tage Std** |
| Husar® WG20 (kommerziell) | 7.1 | 8.3 |
| Biopower 0.5% (kommerziell) | 7.8 | 17.0 |
| F1 0.5% (erfindungsgemäß) | 42.5 | 62.5 |
| Biopower 0.25% PLUS F1 0.15% | 23.4 | 41.2 |

| | | |
|---|---|---|
| * 20°C/56% rel. Luftfeuchte, ** n. 1 Tag Erhöhung auf 30°C/56% rel. Luftfeuchte | | |

Die erfindungsgemäße Formulierung F1 führt zu einer mehr als 6-fachen Erhöhung der Penetration von lodosulfuron nach 1 Tag bzw. 2 Tagen. Das ist mehr als der Standard Biopower bei derselben Einsatzkonzentration von 0,5% und eine Kombination beider ist bei einer Konzentration von 0,4% ebenfalls besser.

**Tabelle 11 Penetration von Tembotrione (0,4 g/l Wirkstoffkonzentration in Spritzflüssigkeit) mit antagonistischem Calcium bei 177 ppm Ca simulierend sehr hartes Wasser**

| Testprodukt (Konz.) | Mittlere Penetration***** in % nach Zeit (n= 4-8) | |
|---|---|---|
| Konzentration Spritzbrühe | 0.4 g/l ai | |
| | 12 Std* | 1 Tag** |
| Soberan® SC420 (kommerziell) *** | <1 | <1 |
| Aureo® *** 0.25% +0.1% AMS (kommerziell) | 3.3 | 4.2 |
| Raizer® 0.5% (kommerziell) | 1.3 | 1.5 |
| F4 0.5% (erfindungsgemäß) | 10.1 | 17.6 |
| (kommerziell) | | |

| | | |
|---|---|---|
| * 20°C/56% rel. Luftfeuchte, ** 30°C/56% rel. Luftfeuchte *** Soberan®: Mischung von Tembotrione und Isoxadifene (Bayer CropScience) **** Aureo (80% methylated seed oil + 20% Emulgator) **** Blattkutikeln von Birne | | |

F4 hat einen Wassergehalt von knapp 50% und hat damit bei 30% weniger Einsatzkonzentration als die Kombination aus Aureo und AMS eine deutlich bessere Förderung der Penetration auch bei diesem sehr harten Wasser gezeigt.

Raizer® (Farmoz, St Leonhard, Australia) ist ein kommerzielles Adjuvant (enthaltend Lecithin, Propionsäure und nicht-ionische Tenside), das als sogenannter "water conditioner" eingesetzt wird, um die antagonistischen Effekte von hartem Wasser zu unterdrücken. F4 ist auch diesem Marktstandard deutlich überlegen.

### Dynamische Oberflächenspannung (Grenzflächenaktivität)

Bei schwer benetzbaren Pflanzen wie den Getreidepflanzen Weizen, Gerste, Triticale, Roggen und Hafer, bei weiteren großen Flächenkulturen Mais, Reis, Soja und Raps, wie auch bei fast allen Ungräsern und zahlreichen schwierig zu kontrollierenden dikotylen Unkräutern wie *Chenopodium album* oder *Euphorbium heterophyllum* ist die Förderung der Anlagerung der Spritzflüssigkeit auf den grünen Pflanzenteilen von entscheidender Bedeutung. Dieser Netzmitteleffekt wurde deshalb auch für das lineare C8-C10 Glucamid bestimmt.

Für gegebene Applikationstechnik bzw. Parameter (Düse, Druck, Wasseraufwand, Anstand zur Pflanzenoberfläche) korreliert der Wert der dynamischen Oberflächenspannung in [mN/m] gut mit der Haftung auf schwer benetzbaren Pflanzen wie Gerste (Getreide). Ein Wert von 50 mN/m (bei 20-21 °C) ergibt gegenüber Wasser (72.8 mN/m) eine Verbesserung der Haftung von "Null Haftung" auf etwa 50% (Baur P, Pontzen R 2007. Basic features of plant surface wettability and deposit formation and the impact of adjuvants. In: R E Gaskin ed. Proceeding of the 8th International Symposium on Adjuvants for Agrochemicals. Publisher: International Society for Agrochemical Adjuvants (ISAA), Columbus, Ohio, USA). Ein Wert von unter 60 mN/m bei 200ms gibt eine sichtbar bessere Anlagerung wäßriger Spritzflüssigkeiten, bei Standardflachstrahldüsen wird eine optimale Benetzung erreicht.

Tabelle 12 zeigt, dass dieser Wert schon bei der niedrigen Testkonzentration in Wasser von 1.5 g/l (bzw. 0.8g/l für die Aktivsubstanz) erreicht bzw. unterschritten wird. Damit sind die veretherten Laktatester hervorragend geeignet, die Anlagerung von Agrochemikalien auf Getreide (mit Mais, Reis, Hirse), Banane, Kohl/Raps, Soja und anderen schwer benetzbaren Kultur- und Schadpflanzen zu fördern. Die positiven Netz- und Hafteffekte gelten natürlich auch für andere Organismen und künstliche Oberflächen bzw. technische Anwendungen etwa zur Erreichung dünner Beschichtungen auf oder der Reinigung von Oberflächen. Nachfolgend werden die Werte der dynamischen Oberflächenspannung für das linearen C810 Glucamid alleine und für einige Formulierungen gezeigt.

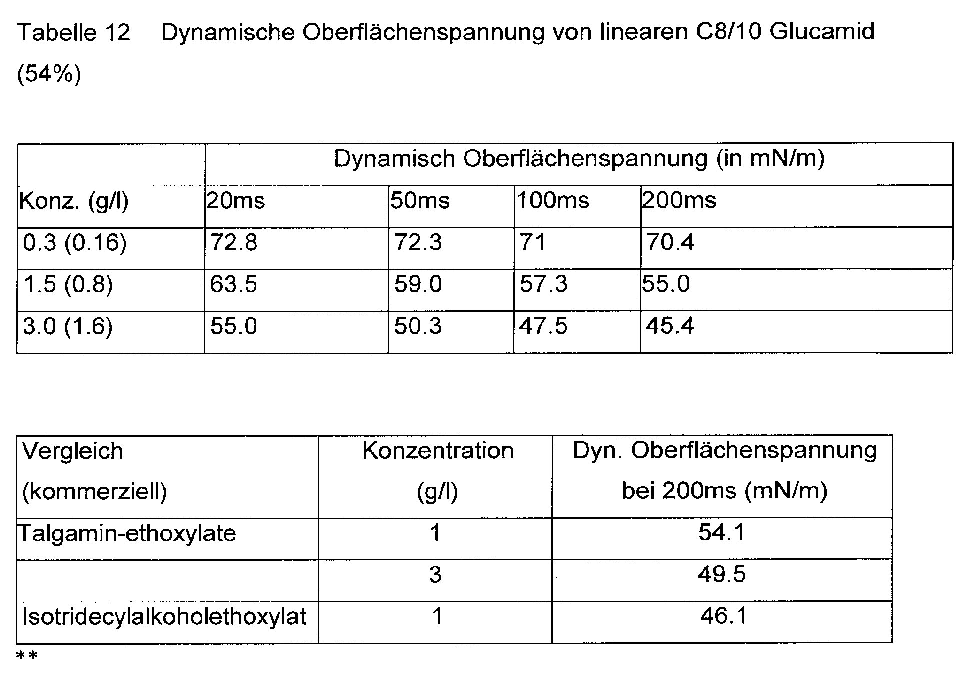

**Tabelle 13 Bedeckungsgrad nachl Spritzapplikation**

| | | |
|---|---|---|
| Messungen des Bedeckungsgrades auf monocotylen Pflanzen wie Weizen oder hier *Pogonanthera spec.* bestätigen eine optimale Benetzung für eine Konzentration von 0.2% des linearen C8-10 Glucamids. Dies gilt für das Reinprodukt, wie für die Formulierungen F1-F4. Beispielhaft ist nachfolgend der Bedeckungsgrad für das F1 bei Applikation mittels Flachstrahldüse in einer Spritzkabine gezeigt. Die Applikationsparameter waren XR11002 Düse (Teejet), 3 bar Spritzdruck, 150 L/ha Wasser; der Abstand Düse zu horizontal platziertem Blatt 45cm: | | |

| Formulierung | Konzentration | Bedeckungsgrad [%] |
|---|---|---|
| Wasser | - | 7,5 |
| F1 | 1 g/l | 28,0 |
| F1 | 2,5 g/l | 57,5 |
| F1 | 5,0 g/l | 78,5 |

Der Bedeckungsgrad ist die nach Applikation auf dem Blatt mit den Spritztröpfchen bedeckte Fläche. Ein Wert von 100% entspricht einem durchgehenden Film der nicht angestrebt wird. Der Bedeckungsgrad mit Wasser war unter 5% und wurde mit F1 erhöht auf 12% bei 1 g/l, 30% bei 2.5 g/l und 43% bei 5 g/l.

### Feldversuche

Beispielhaft wurde die Wirkung des linearen C8/10 Glucamids der Formulierung F1 in Feldversuchen der North Dakota State University im Vergleich zu lokal praxisüblichen Standards und den lokal üblichen Praxisbedingungen untersucht. In den Tests wurde eine Menge von 360 Gramm Glyphosatsäure als Touchdown® Hitech oder pro 50 g Mesotrione als Callisto® SC480 pro Hektar ausgebracht. Der Wasseraufwand war 80 Liter pro ha. Dabei wurde eine Flachstrahldüse verwendet mit 3 bar. Die Kontrolle der beiden wichtigen lokalen Unkräuter *Setaria italica* (SETIT) und *Amaranthus spp.* (AMASS) wurde 14 Tage (24.7.2013) und 28 Tage (8.8.2013) bonitiert. Der lokale Positivstandard ist eine Kombination von 10 g/l des Additives R- 11® (Nonylphenylethoxylat, Willbur-Ellis) kombiniert mit Ammoniumsulfat bei ebenfalls etwas mehr als 10 g/l. Dagegen wurde die erfindungsgemäße Formulierung F1 verglichen, welche bei 1.5 g/l und 4.5 g/l geprüft wurde.

**Tabelle 14 Kontrolle der Unkräuter Setaria italica und Amaranthus spp. Mit Touchdown® Hitech mit praxisüblichen Additiven oder erfindungsgemäßen F1**

| Additiv | Konz. g/l | 14 Tage | | 28 Tage | |
|---|---|---|---|---|---|
| | | AMASS | SETIT | AMASS | SETIT |
| Standard | | | | | |
| R- 11® | 10 | 88 | 99 | 88 | 95 |
| R- 11® + AMS | 10+10 | 91.7 | 99 | 90 | 93 |
| F1 | 1.5 | 87 | 99 | 87 | 98 |
| F1 | 4.5 | 90 | 99 | 92 | 96 |

Die erfindungsgemäße Formulierung F1 führt zu einer gleich guten bzw. besseren Kontrolle der Unkräuter mit Touchdown® Hitech als die Markt-/Praxisstandards. Dabei ist das Mittel erheblich wirtschaftlicher, da die Einsatzkonzentration mehr als 10-fach niedriger war.

**Tabelle 15 Kontrolle der Unkräuter Setaria italica und Amaranthus spp. Mit Callisto® SC480 mit praxisüblichen Additiven oder erfindungsgemäßen F1**

| Additiv | Konz. g/l | 14 Tage | | 28 Tage | |
|---|---|---|---|---|---|
| | | AMASS | SETIT | AMASS | SETIT |
| Standard | | | | | |
| R- 11® + AMS | 10+10 | 33 | 15 | 33 | 13 |
| F1 | 1.5 | 62 | 18 | 57 | 15 |
| F1 | 4.5 | 53 | 13 | 63 | 13 |

Die erfindungsgemäße Formulierung F1 führt zu einer besseren Kontrolle der Unkräuter mit Callisto® SC480 als die Markt-/Praxisstandards. Dabei ist das Mittel erheblich wirtschaftlicher, da die Einsatzkonzentration 4 bis 10-fach niedriger ist.

## Patentansprüche

1. Adjuvant-Zusammensetzung, enthaltend
a) ein oder mehrere Alkylglucamide der Formel (I), 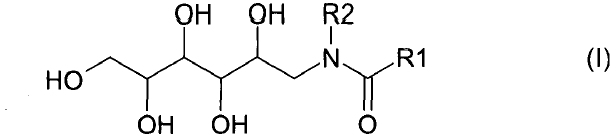 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
b) mindestens ein wasserlösliches Ammoniumsalz,
c) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten und
d) Wasser.

2. Adjuvant-Zusammensetzung nach Anspruch 1, **dadurch gekennzeichnet, dass** R1 für eine lineare oder verzweigte Alkylgruppe mit 7 bis 9 Kohlenstoffatomen und R2 für eine Methylgruppe steht.

3. Adjuvant-Zusammensetzung nach Anspruch 1 oder 2, **dadurch gekennzeichnet, dass** es sich um ein Gemisch aus Octyl-N-methylglucamid R1 C₇-Alkyl und Decyl-N methylglucamid R1 = C₉-Alkyl oder Nonyl-N-methylglucamid, R1 = C₈-Alkyl, handelt.

4. Adjuvant-Zusammensetzung nach einem oder mehreren der Ansprüche 1 bis 3, **dadurch gekennzeichnet, dass** der Anteil des einen oder der mehreren Alkylglucamide a) 10 bis 90 Gew.-%, bezogen auf das Gesamtgewicht der Zusammensetzung, beträgt.

5. Adjuvant-Zusammensetzung nach einem der Ansprüche 1 bis 4, **dadurch gekennzeichnet, dass** das Ammoniumsalz b) gewählt ist aus der Gruppe bestehend aus Ammoniumsulfat, Ammoniumnitrat, Ammoniumnitratharnstoff, Ammoniumphosphat, Ammoniumcitrat, Ammoniumchlorid und Ammoniumthiosulfat.

6. Adjuvant-Zusammensetzung nach einem der Ansprüche 1 bis 5, **dadurch gekennzeichnet, dass** die Komponente c) Propylenglykol ist.

7. Verwendung einer Adjuvant-Zusammensetzung nach einem oder mehreren der Ansprüche 1 bis 6 zur Steigerung der biologischen Aktivität von Pestiziden, vorzugsweise von Herbiziden.

8. Verwendung einer Adjuvant-Zusammensetzung nach einem oder mehreren der Ansprüche 1 bis 6 zur Herstellung einer wässrigen Pestizidzusammensetzung.

9. Pestizid-Zusammensetzung enthaltend
a) ein oder mehrere Alkylglucamide der Formel (I) 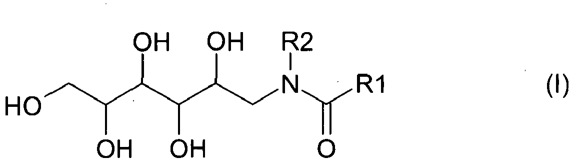 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
b) ein oder mehrere Ammoniumsalze,
c) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten,
d) Wasser,
e) gegebenenfalls ein oder mehrere Co-Solventien,
f) gegebenenfalls ein oder mehrere Hilfsstoffe,
g) ein oder mehrere wasserlösliche Pestizide.
h) gegebenenfalls ein oder mehrere nicht-wasserlösliche Pestizide.

10. Pestizid-Zusammensetzung nach Anspruch 9, **dadurch gekennzeichnet, dass** das eine oder die mehreren wasserlöslichen Pestizide der Komponente g) ausgewählt sind aus der Gruppe der Herbizide, bevorzugt aus der Gruppe bestehend aus den wasserlöslichen Salzen von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Florasulam, Flumiclorac, Fluoroglycofen, Fluroxypyr, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Mesotrione, Nicosulfuron, Octansäure, Pelargonsäure, Picloram, Quizalofop, 2,3,6-TBA, Sulcotrione, Tembotrione und Triclopyr.

11. Pestizid -Zusammensetzung nach Anspruch 9 oder 10, **dadurch gekennzeichnet, dass** das eine oder die mehreren wasserlöslichen Pestizide der Komponente g) ausgewählt sind aus wasserlöslichen Salzen von 2,4-D, Bentazon, Dicamba, Fomesafen, Glyphosat, Glufosinat, MCPA, Mesotrione Paraquat und Sulcotrione, bevorzugt aus den wasserlöslichen Salzen von Glyphosat und Dicamba.

12. Pestizid -Zusammensetzung nach einem der Ansprüche 9 bis 11, **dadurch gekennzeichnet dass** sie einen oder mehrere nicht-wasserlösliche Wirkstoffe enthält.

13. Pestizid -Zusammensetzung nach einem der Ansprüche 9 bis 12, **dadurch gekennzeichnet, dass** das die Gesamtmenge der Pestizide der Komponente g) in der Zusammensetzung größer als 100 g/l, bezogen auf deren Säureäquivalent, beträgt.

14. Pestizid -Zusammensetzung nach einem oder mehreren der Ansprüche 9 bis 13, **dadurch gekennzeichnet, dass** die Gesamtmenge der Alkylglucamide der Formel (I) in der Zusammensetzung von 20 bis 250 g/L beträgt.

15. Pestizid-Zusammensetzung nach einem der Ansprüche 9 bis 14, **dadurch gekennzeichnet, dass** der Gehalt an dem einen oder den mehreren Ammoniumsalzen b) 10 bis 500 g/l, bezogen auf die gesamte Zusammensetzung, beträgt.

16. Pestizid -Zusammensetzung nach einem oder mehreren der Ansprüche 9 bis 15, **dadurch gekennzeichnet, dass** die Zusammensetzung neben den Komponenten a) bis d) ein oder mehrere weitere Adjuvants enthält.

17. Pestizid -Zusammensetzung nach einem der Ansprüche 9 bis 16, **dadurch gekennzeichnet, dass** sie als Konzentrat-Formulierung vorliegt, die vor dem Gebrauch verdünnt wird und 5 bis 80 Gew.-% des einen oder der mehreren wasserlöslichen Pestizide der Komponente g) und 1 bis 25 Gew.-% des einen oder der mehreren Alkylglucamide der Komponente a) enthält.

18. Pestizid -Zusammensetzung nach einem der Ansprüche 9 bis 16, **dadurch gekennzeichnet, dass** sie als Spritzbrühe vorliegt und 0,001 bis 10 Gew. % des einen oder der mehreren wasserlöslichen Pestizide der Komponente g) und 0,01 bis 1 Gew. % der einen oder der mehreren Alkylglucamide der Komponente a) enthält.

19. Verwendung einer Pestizid -Zusammensetzung nach einem der Ansprüche 9 bis 18 zur Kontrolle und/oder zur Bekämpfung von unerwünschtem Pflanzenwuchs, Pilzerkrankungen oder Insektenbefall bei Pflanzen.

20. Verfahren zum Schutz von Pflanzen vor Schadorganismen, **dadurch gekennzeichnet, dass** man die Pflanze, die Schadorganismen oder deren Lebensraum mit einer Pestizid-Zusammensetzung, enthaltend eine erfindungsgemäße Adjuvant-Zusammensetzung nach einem der Ansprüche 1 bis 6, in Kontakt bringt.

## Claims

1. An adjuvant composition comprising
a) one or more alkylglucamides of the formula (I) 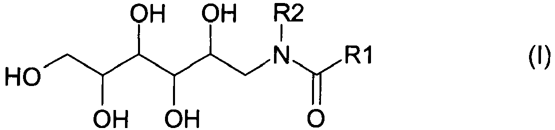 in which
R1 is a linear or branched alkyl group having 5 to 9 carbon atoms,
R2 is an alkyl group having 1 to 3 carbon atoms,
b) at least one water-soluble ammonium salt,
c) propylene glycol, dipropylene glycol, mixtures of propylene glycol and dipropylene glycol, each optionally in a mixture with polypropylene glycol and/or polyethylene glycol, each having up to ten repeat units, and
d) water.

2. The adjuvant composition as claimed in claim 1, wherein R1 is a linear or branched alkyl group having 7 to 9 carbon atoms and R2 is a methyl group.

3. The adjuvant composition as claimed in claim 1 or 2, which is a mixture of octyl-N-methylglucamide R1 = C₇-alkyl and decyl-N-methylglucamide R1 = C₉-alkyl or nonyl-N-methylglucamide, R1 = C₈-alkyl.

4. The adjuvant composition as claimed in one or more of claims 1 to 3, wherein the proportion of the one or more alkylglucamides a) is 10% to 90% by weight, based on the total weight of the composition.

5. The adjuvant composition as claimed in any of claims 1 to 4, wherein the ammonium salt b) is selected from the group consisting of ammonium sulfate, ammonium nitrate, ammonium nitrate urea, ammonium phosphate, ammonium citrate, ammonium chloride and ammonium thiosulfate.

6. The adjuvant composition as claimed in any of claims 1 to 5, wherein component c) is propylene glycol.

7. The use of an adjuvant composition as claimed in one or more of claims 1 to 6 for enhancing the biological activity of pesticides, preferably of herbicides.

8. The use of an adjuvant composition as claimed in one or more of claims 1 to 6 for producing an aqueous pesticide composition.

9. A pesticide composition comprising
a) one or more alkylglucamides of the formula (I) 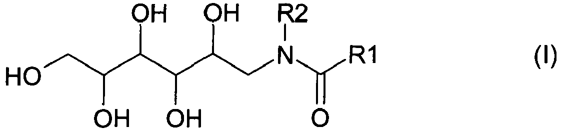 in which
R1 is a linear or branched alkyl group having 5 to 9 carbon atoms,
R2 is an alkyl group having 1 to 3 carbon atoms,
b) one or more ammonium salts,
c) propylene glycol, dipropylene glycol, mixtures of propylene glycol and dipropylene glycol, each optionally in a mixture with polypropylene glycol and/or polyethylene glycol, each having up to ten repeat units,
d) water,
e) optionally one or more cosolvents,
f) optionally one or more auxiliaries,
g) one or more water-soluble pesticides,
h) optionally one or more water-insoluble pesticides.

10. The pesticide composition as claimed in claim 9, wherein the one or more water-soluble pesticide(s) of component g) are selected from the group of the herbicides, preferably from the group consisting of the water-soluble salts of acifluorfen, aminopyralid, amitrole, asulam, benazolin, bentazon, bialaphos, bispyribac, bromacil, bromoxynil, bicyclopyron, chloramben, clopyralid, 2,4-D, 2,4-DB, dicamba, dichlorprop, difenzoquat, diquat, endothal, fenoxaprop, flamprop, florasulam, flumiclorac, fluoroglycofen, fluroxypyr, fomesafen, fosamine, glufosinate, glyphosate, imizameth, imazamethabenz, imazamox, imazapic, imazapyr, imazaquin, imazethapyr, MCPA, MCPB, mecoprop, mesotrione, nicosulfuron, octanoic acid, pelargonic acid, picloram, quizalofop, 2,3,6-TBA, sulcotrione, tembotrione and triclopyr.

11. The pesticide composition as claimed in claim 9 or 10, wherein the one or more water-soluble pesticides of component g) are selected from water-soluble salts of 2,4-D, bentazon, dicamba, fomesafen, glyphosate, glufosinate, MCPA, mesotrione, paraquat and sulcotrione, preferably from the water-soluble salts of glyphosate and dicamba.

12. The pesticide composition as claimed in any of claims 9 to 11, which comprises one or more water-insoluble active ingredients.

13. The pesticide composition as claimed in any of claims 9 to 12, wherein the the total amount of the pesticides of component g) in the composition is greater than 100 g/L, based on the acid equivalent thereof.

14. The pesticide composition as claimed in one or more of claims 9 to 13, wherein the total amount of the alkylglucamides of the formula (I) in the composition is from 20 to 250 g/L.

15. The pesticide composition as claimed in any of claims 9 to 14, wherein the content of the one or more ammonium salts b) is 10 to 500 g/L, based on the overall composition.

16. The pesticide composition as claimed in one or more of claims 9 to 15, wherein the composition comprises, as well as components a) to d), one or more further adjuvants.

17. The pesticide composition as claimed in any of claims 9 to 16, which takes the form of a concentrate formulation which is diluted prior to use and contains 5% to 80% by weight of the one or more water-soluble pesticides of component g) and 1% to 25% by weight of the one or more alkylglucamides of component a).

18. The pesticide composition as claimed in any of claims 9 to 16, which takes the form of a spray liquor and comprises 0.001% to 10% by weight of the one or more water-soluble pesticides of component g) and 0.01% to 1% by weight of the one or more alkylglucamides of component a).

19. The use of a pesticide composition as claimed in any of claims 9 to 18 for control and/or for abatement of unwanted plant growth, fungal disorders or insect infestation in plants.

20. A method of protecting plants from harmful organisms, wherein the plant, the harmful organisms or their habitat is brought into contact with a pesticide composition comprising an inventive adjuvant composition as claimed in any of claims 1 to 6.

## Revendications

1. Composition d'adjuvant, contenant :
a) un ou plusieurs alkylglucamides de formule (I) 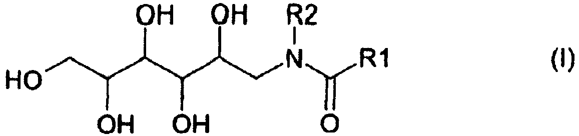 dans laquelle
R1 représente un groupe alkyle linéaire ou ramifié de 5 à 9 atomes de carbone,
R2 représente un groupe alkyle de 1 à 3 atomes de carbone,
b) au moins un sel d'ammonium soluble dans l'eau,
c) du propylène glycol, du dipropylène glycol, des mélanges de propylène glycol et de dipropylène glycol, chacun éventuellement en mélange avec du polypropylène glycol et/ou du polyéthylène glycol, chacun contenant jusqu'à dix unités de répétition, et
d) de l'eau.

2. Composition d'adjuvant selon la revendication 1, **caractérisée en ce que** R1 représente un groupe alkyle linéaire ou ramifié de 7 à 9 atomes de carbone et R2 représente un groupe méthyle.

3. Composition d'adjuvant selon la revendication 1 ou 2, **caractérisée en ce qu'**il s'agit d'un mélange d'octyl-N-méthylglucamide avec R1 = alkyle en C₇ et de décyl-N-méthylglucamide avec R1 = alkyle en C₉ ou de nonyl-N-méthylglucamide avec R1 = alkyle en C₈.

4. Composition d'adjuvant selon une ou plusieurs des revendications 1 à 3, **caractérisée en ce que** la proportion du ou des alkylglucamides a) est de 10 à 90 % en poids, par rapport au poids total de la composition.

5. Composition d'adjuvant selon l'une quelconque des revendications 1 à 4, **caractérisée en ce que** le sel d'ammonium b) est choisi dans le groupe constitué par le sulfate d'ammonium, le nitrate d'ammonium, le nitrate d'ammonium-urée, le phosphate d'ammonium, le citrate d'ammonium, le chlorure d'ammonium et le thiosulfate d'ammonium.

6. Composition d'adjuvant selon l'une quelconque des revendications 1 à 5, **caractérisée en ce que** le composant c) est le propylène glycol.

7. Utilisation d'une composition d'adjuvant selon une ou plusieurs des revendications 1 à 6 pour augmenter l'activité biologique de pesticides, de préférence d'herbicides.

8. Utilisation d'une composition d'adjuvant selon une ou plusieurs des revendications 1 à 6 pour la fabrication d'une composition aqueuse de pesticide.

9. Composition de pesticide, contenant :
a) un ou plusieurs alkylglucamides de formule (I) 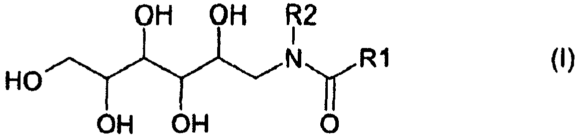 dans laquelle
R1 représente un groupe alkyle linéaire ou ramifié de 5 à 9 atomes de carbone,
R2 représente un groupe alkyle de 1 à 3 atomes de carbone,
b) un ou plusieurs sels d'ammonium,
c) du propylène glycol, du dipropylène glycol, des mélanges de propylène glycol et de dipropylène glycol, chacun éventuellement en mélange avec du polypropylène glycol et/ou du polyéthylène glycol, chacun contenant jusqu'à dix unités de répétition,
d) de l'eau,
e) éventuellement un ou plusieurs co-solvants,
f) éventuellement un ou plusieurs adjuvants,
g) un ou plusieurs pesticides solubles dans l'eau,
h) éventuellement un ou plusieurs pesticides non solubles dans l'eau.

10. Composition de pesticide selon la revendication 9, **caractérisée en ce que** le ou les pesticides solubles dans l'eau selon le composant g) sont choisis dans le groupe des herbicides, de préférence dans le groupe constitué par les sels solubles dans l'eau d'acifluorfène, d'aminopyralide, d'amitro, d'asulam, de bénazoline, de bentazone, de bialaphos, de bispyribac, de bromacil, de bromoxynil, de bicyclopyrone, de chloramben, de clopyralide, de 2,4-D, de 2,4-DB, de dicamba, de dichlorprop, de difenzoquat, de diquat, d'endothal, de fénoxaprop, de flamprop, de florasulam, de flumiclorac, de fluoroglycofène, de fluroxypyr, de fomésafène, de fosamine, de glufosinate, de glyphosate, d'imizamet, d'imazaméthabenz, d'imazamox, d'imazapic, d'imazapyr, d'imazaquine, d'imazéthapyr, de MCPA, de MCPB, de mécoprop, de mésotrione, de nicosulfuron, d'acide octanoïque, d'acide pélargonique, de picloram, de quizalofop, de 2,3,6-TBA, de sulcotrione, de tembotrione et de triclopyr.

11. Composition de pesticide selon la revendication 9 ou 10, **caractérisée en ce que** le ou les pesticides solubles dans l'eau selon le composant g) sont choisis parmi les sels solubles dans l'eau de 2,4-D, de bentazone, de dicamba, de fomésafène, de glyphosate, de glufosinate, de MCPA, de mésotrione paraquat et de sulcotrione, de préférence parmi les sels solubles dans l'eau de glyphosate et de dicamba.

12. Composition de pesticide selon l'une quelconque des revendications 9 à 11, **caractérisée en ce qu'**elle contient un ou plusieurs agents actifs non solubles dans l'eau.

13. Composition de pesticide selon l'une quelconque des revendications 9 à 12, **caractérisée en ce que** la quantité totale des pesticides selon le composant g) dans la composition est supérieure à 100 g/l, par rapport à leur équivalent acide.

14. Composition de pesticide selon une ou plusieurs des revendications 9 à 13, **caractérisée en ce que** la quantité totale des alkylglucamides de formule (I) dans la composition est de 20 à 250 g/l.

15. Composition de pesticide selon l'une quelconque des revendications 9 à 14, **caractérisée en ce que** la teneur en le ou les sels d'ammonium b) est de 10 à 500 g/l, par rapport à la composition totale.

16. Composition de pesticide selon une ou plusieurs des revendications 9 à 15, **caractérisée en ce que** la composition contient un ou plusieurs adjuvants supplémentaires en plus des composants a) à d).

17. Composition de pesticide selon l'une quelconque des revendications 9 à 16, **caractérisée en ce qu'**elle se présente sous la forme d'une formulation de concentré, qui est diluée avant l'utilisation et contient 5 à 80 % en poids du ou des pesticides solubles dans l'eau selon le composant g) et 1 à 25 % en poids du ou des alkylglucamides selon le composant a).

18. Composition de pesticide selon l'une quelconque des revendications 9 à 16, **caractérisée en ce qu'**elle se présente sous la forme d'une bouillie de pulvérisation et contient 0,001 à 10 % en poids du ou des pesticides solubles dans l'eau selon le composant g) et 0,01 à 1 % en poids du ou des alkylglucamides selon le composant a).

19. Utilisation d'une composition de pesticide selon l'une quelconque des revendications 9 à 18 pour l'élimination et/ou pour la lutte contre une végétation indésirable, les maladies des champignons ou les infestations par des insectes chez les plantes.

20. Procédé de protection de plantes contre des organismes nocifs, **caractérisé en ce que** les plantes, les organismes nocifs ou leur habitat sont mis en contact avec une composition de pesticide, contenant une composition d'adjuvant selon l'invention selon l'une quelconque des revendications 1 à 6.
